(19) Europäisches Patentamt
European Patent Office
Office européen des brevets

(11) EP 4 287 740 A1

(12) EUROPEAN PATENT APPLICATION
published in accordance with Art. 153(4) EPC

(43) Date of publication:
06.12.2023 Bulletin 2023/49

(51) International Patent Classification (IPC):
H04W 72/04 (2023.01)

(21) Application number: 22749189.1

(22) Date of filing: 30.01.2022

(52) Cooperative Patent Classification (CPC):
G06N 3/04; G06Q 20/38; H04W 72/04

(86) International application number:
PCT/CN2022/075136

(87) International publication number:
WO 2022/166910 (11.08.2022 Gazette 2022/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.02.2021 CN 202110179008

(71) Applicant: Sony Group Corporation
Tokyo 108-0075 (JP)

(72) Inventors:
• LIU, Jianfeng
Beijing 100044 (CN)
• TIAN, Zhong
Beijing 100027 (CN)
• SUN, Chen
Beijing 100027 (CN)
• ZHAO, Youping
Beijing 100044 (CN)

(74) Representative: D Young & Co LLP
120 Holborn
London EC1N 2DY (GB)

(54) USER EQUIPMENT, ELECTRONIC DEVICE, WIRELESS COMMUNICATION METHOD AND STORAGE MEDIUM

(57) The present disclosure relates to an electronic device, a wireless communication method and a computer-readable storage medium. A wireless communication system comprises a plurality of electronic devices, wherein the plurality of electronic devices record spectrum transaction information in the wireless communication system by using blockchains. Each of the electronic devices in the wireless communication system comprises a processing circuit, which is configured: to determine the size of the next block and the generation time of the next block according to information related to a wireless communication environment of the wireless communication system; and to send the size of the next block and the generation time of the next block to the other electronic devices in the wireless communication system. By using the electronic device, the wireless communication method and the computer-readable storage medium in the present disclosure, when blockchain technology is applied to spectrum management, the processing speed of a spectrum transaction can be increased and the storage overhead of each node can be reduced.

Figure 4

Electronic device 400

Determination unit 410

Calculation unit 430

Collection unit 440

Measurement unit 450

Block generation unit 460

Performance determination unit 470

Communication unit 420

**Description**

The present application claims priority to Chinese Patent Application No. 202110179008.9, titled "ELECTRONIC DEVICE, WIRELESS COMMUNICATION METHOD AND COMPUTER READABLE STORAGE MEDIUM", filed on February 8, 2021 with the China National Intellectual Property Administration, which is incorporated herein by reference in its entirety.

**FIELD**

Embodiments according to present disclosure generally relate to the technical field of wireless communications, and in particular to an electronic device, a wireless communication method, and a computer-readable storage medium. More specifically, the present disclosure relates to an electronic device operating as a spectrum management device in a wireless communication system, a wireless communication method executed by a spectrum management device in a wireless communication system, and a computer-readable storage medium.

**BACKGROUND**

A blockchain is a chained data structure in which data blocks are linked sequentially in a chronological order, and is a distributed ledger which is cryptographically guaranteed to be tamper-resistant and unforgeable. The blockchain is characterized by having time series data and being decentralized (distributed), tamper-resistant, collectively maintained, open and transparent, and secure and trustworthy.

In the conventional generation of a blockchain, a block has a fixed size of 1MB, and an interval between a generation time of the current block and a generation time of the previous block is fixed to 10 minutes.

Since the blockchain has a distributed structure, the blockchain technology is applicable to the technical field of spectrum management. That is, spectrum transactions may be recorded using blocks in a blockchain. However, in a case where the blockchain technology is applied to spectrum management, the fixed size of the block may result in a low probability of a successful transmission of the block and excessive consumption of storage space at respective nodes. In addition, the fixed interval between the generation times of the blocks may result in a limited processing speed for a transaction. Therefore, the requirements of wireless communications are not satisfied.

Therefore, it is necessary to provide a technical solution which can improve the processing speed for the spectrum transaction and reduce storage overhead at respective nodes while applying the blockchain technology to the spectrum management.

**SUMMARY**

This section provides a general summary of the present disclosure, rather than a full disclosure of the full scope or all features of the present disclosure.

An object of the present disclosure is to provide an electronic device, a wireless communication method, and a computer readable storage medium, which can improve a processing speed for spectrum transactions and reduce storage overhead at respective nodes while applying the blockchain technology to spectrum management.

An electronic device in a wireless communication system is provided according to an aspect of the present disclosure. The wireless communication system includes a plurality of electronic devices that use a blockchain to record spectrum transaction information in the wireless communication system, and the electronic device includes processing circuitry configured to: determine a size of a next block and a generation time of the next block according to information related to a wireless communication environment of the wireless communication system, and transmit the size of the next block and the generation time of the next block to other electronic devices in the wireless communication system.

An electronic device in a wireless communication system is provided according to another aspect of the present disclosure. The wireless communication system includes a plurality of electronic devices that use a blockchain to record spectrum transaction information in the wireless communication system, and the electronic device includes processing circuitry configured to: determine a candidate size of a next block and a candidate generation time of the next block according to information related to a wireless communication environment where the electronic device is located, and transmit the determined candidate size of the next block and candidate generation time of the next block to an electronic device having an accounting right of the previous block, so that the electronic device having the accounting right of the previous block determines a size of the next block and a generation time of the next block according to information related to a wireless communication environment of the wireless communication system.

A wireless communication method executed by an electronic device in a wireless communication system is provided according to another aspect of the present disclosure. The wireless communication system includes a plurality of electronic devices that use a blockchain to record spectrum transaction information in the wireless communication system, and the wireless communication method includes: determining a size of a next block and a generation time of the next block according to information related to a wireless communication environment of the wireless communication system, and transmitting the size of the next block and the generation time of the next block to other electronic devices in the wireless communication system.

A wireless communication method executed by an electronic device in a wireless communication system is provided according to another aspect of the present disclosure. The wireless communication system includes a plurality of electronic devices that use a blockchain to record spectrum transaction information in the wireless communication system, and the wireless communication method includes: determining a candidate size of a next block and a candidate generation time of the next block according to information related to a wireless communication environment where the electronic device is located, and transmitting the determined candidate size of the next block and candidate generation time of the next block to an electronic device having an accounting right of the previous block, so that the electronic device having the accounting right of the previous block determines a size of the next block and a generation time of the next block according to information related to a wireless communication environment of the wireless communication system.

A computer readable storage medium including executable computer instructions is provided according to another aspect of the present disclosure. The executable computer instructions, when executed by a computer, cause the computer to execute the wireless communication method according to the present disclosure.

A computer program is provided according to another aspect of the present disclosure. The computer program, when executed by a computer, causes the computer to execute the wireless communication method according to the present disclosure.

With the electronic device, the wireless communication method, and the computer-readable storage medium according to the present disclosure, the size of the next block and the generation time of the next block can be determined according to information related to the wireless communication environment of the wireless communication system. As such, the size and the generation time of the block can be dynamically determined according to the wireless communication environment, thereby increasing the processing speed of spectrum transactions and reducing the storage overhead at respective nodes.

Further application fields will become apparent from the description provided herein. The description and specific examples in this summary are for illustrative purposes only and are not intended to limit the scope of the present disclosure.

## BRIEF DESCRIPTION OF THE DRAWINGS

The accompanying drawings described herein are only for the purpose of illustration of selected embodiments, rather than all possible embodiments, and are not intended to limit the scope of the present disclosure. In the accompanying drawings:

Figure 1 is a schematic diagram illustrating a wireless communication scenario including multiple wireless communication environments;

Figure 2 is a schematic diagram illustrating a process of recording spectrum transaction information by using blockchain technology;

Figure 3 illustrates a structure of a blockchain;

Figure 4 is a block diagram illustrating an example configuration of an electronic device according to an embodiment of the present disclosure;

Figure 5 is a schematic diagram illustrating a process of determining a size and a generation time of a next block by using a back propagation neural network according to an embodiment of the present disclosure;

Figure 6 is a block diagram illustrating an example configuration of an electronic device according to another embodiment of the present disclosure;

Figure 7 is a signaling flow illustrating a process of recording spectrum transaction information by using blockchain technology according to an embodiment of the present disclosure;

Figure 8(a) is a schematic diagram illustrating a process of recording spectrum transaction information by using blockchain technology according to an embodiment of the present disclosure;

Figure 8(b) is a schematic diagram illustrating a process of recording spectrum transaction information by using blockchain technology according to an embodiment of the present disclosure;

Figure 8(c) is a schematic diagram illustrating a process of recording spectrum transaction information by using blockchain technology according to an embodiment of the present disclosure;

Figure 9 is a flowchart illustrating a wireless communication method executed by an electronic device according to an embodiment of the present disclosure;

Figure 10 is a flowchart illustrating a wireless communication method executed by an electronic device according to another embodiment of the present disclosure;

Figure 11 is a simulation schematic diagram illustrating an effect of a channel condition of an electronic device on determination of a size of a block according to an embodiment of the present disclosure;

Figure 12 is a simulation schematic diagram illustrating an effect of a channel condition of an electronic device on determination of a generation time of a block according to an embodiment of the present disclosure;

Figure 13 is a simulation schematic diagram illustrating an effect of a channel condition of an electronic device on determination of a size of a block according to an embodiment of the present disclosure;

Figure 14 is a simulation schematic diagram illustrating an effect of a channel condition of an electronic device on determination of a size of a block according to an embodiment of the present disclosure;

Figure 15 is a simulation schematic diagram illustrating an effect of a channel condition of an electronic device on the determination of a generation time of a block according to an embodiment of the present disclosure;

Figure 16 is a simulation schematic diagram illustrating an effect of transaction fees on determination of a size of a block according to an embodiment of the present disclosure;

Figure 17 is a simulation schematic diagram illustrating an effect of transaction fees on determination of a generation time of a block according to an embodiment of the present disclosure;

Figure 18 is a simulation schematic diagram illustrating an effect of transaction fees on determination of a generation time of a block according to an embodiment of the present disclosure;

Figure 19 is a simulation schematic diagram illustrating an effect of transaction fees on determination of a size of a block according to an embodiment of the present disclosure;

Figure 20 is a simulation schematic diagram illustrating an effect of transaction fees on determination of a generation time of a block according to an embodiment of the present disclosure;

Figure 21 is a simulation schematic diagram illustrating an effect of a variable block size on a processing speed of transactions according to an embodiment of the present disclosure;

Figure 22 is a simulation schematic diagram illustrating an effect of a variable block size on consumption of storage space of an electronic device according to an embodiment of the present disclosure;

Figure 23 is a block diagram illustrating a first example of a schematic configuration of an eNB (Evolved Node B); and

Figure 24 is a block diagram illustrating a second example of a schematic configuration of an eNB.

Although it is easy to make various modifications and replacements to the present disclosure, specific embodiments are shown in the drawings and described in detail herein as examples. It should be understood that, the description of specific embodiments herein is not intended to limit the present disclosure to specific forms that are disclosed. On the contrary, an object of the present disclosure is to cover all modifications, equivalents and replacements that fall within the spirit and scope of the present disclosure. It should be noted that throughout the several drawings, corresponding components are indicated by corresponding reference numerals.

**DETAILED DESCRIPTION OF EMBODIMENTS**

Examples of the present disclosure are now fully described with reference to the accompanying drawings. The following description is merely substantially exemplary and is not intended to limit the present disclosure, an application or use thereof.

Exemplary embodiments are provided so that the present disclosure is described in detail and fully conveys the scope thereof to those skilled in the art. Examples of specific components, apparatus, methods and other specific details are set forth to provide detailed understanding of embodiments of the present disclosure. It will be apparent to those skilled in the art that the exemplary embodiments may be implemented in various forms without specific details, and they should not be construed as limiting the scope of the present disclosure. In some exemplary embodiments, well-known processes, well-known structures, and well-known technologies are not described in detail.

The description will be given in the following order.

1. Description of a scenario

2. Example configuration of an electronic device having an accounting right of the Nth block

3. Example configuration of an electronic device other than the electronic device having an accounting right of the Nth block

4. Method embodiment

5. Simulation embodiment

6. Application example

<1. Description of a scenario>

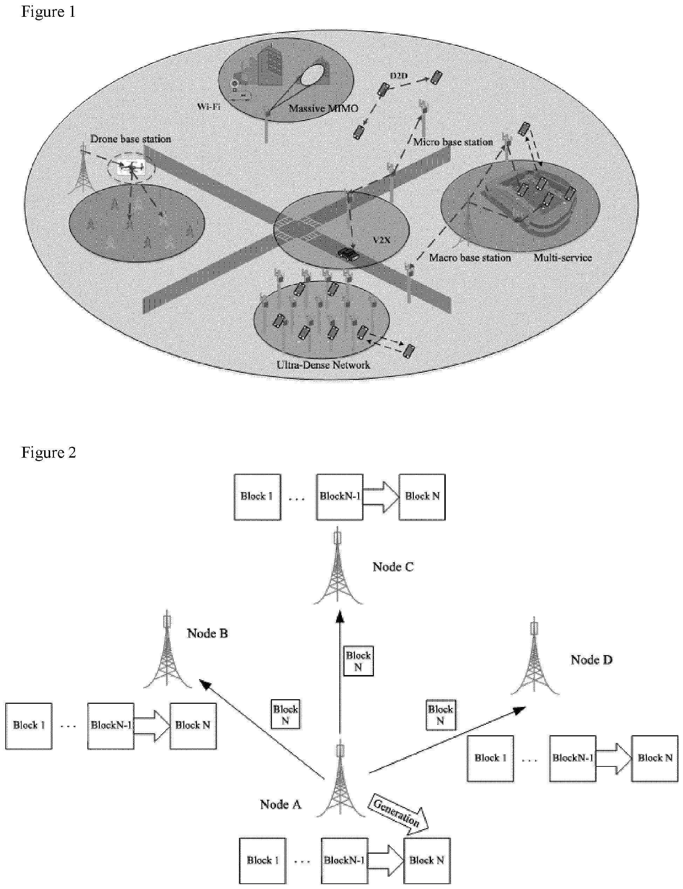

Figure 1 is a schematic diagram illustrating a wireless communication scenario including various wireless communication environments. As shown in Figure 1, the scenario includes various wireless communication environments such as Wi-Fi, massive MIMO, Ultra-Dense Network, drone base stations, macro base stations, micro base stations, D2D, and V2X. A network side device and user equipment in each wireless communication environment may form a wireless communication system. The network side device may be a base station device, such as a macro base station, a micro base station, and an drone base station. The user equipment may be a vehicle, a mobile phone, and the like. Different structures and characteristics of wireless communication environments result in a difference in parameters such as user density, transaction density, signal-to-noise ratio threshold, user moving speed, transaction delay requirement, etc. The devices in each of the wireless communication environments may maintain a blockchain to record spectrum transaction information in the wireless communication environment.

Figure 2 is a schematic diagram illustrating a process of recording spectrum transaction information by using blockchain technology. Figure 2 illustrates an example in which a wireless communication system includes four nodes, i.e., node A, node B, node C, and node D, each having a spectrum management function. Here, it is assumed that the node A has an accounting right of block N (N is a positive integer representing a serial number of a block). After the block N is generated at the node A, the node A may transmit the block N to the node B, the node C and the node D. Thereafter, the node B, the node C and the node D may add contents of the block N to blockchains maintained by the node B, the node C and the node D, respectively. In this way, in the wireless communication system, the blockchain can be maintained by all the four nodes, and a modification on the blockchain made by any node needs to be authorized and permitted by the other nodes.

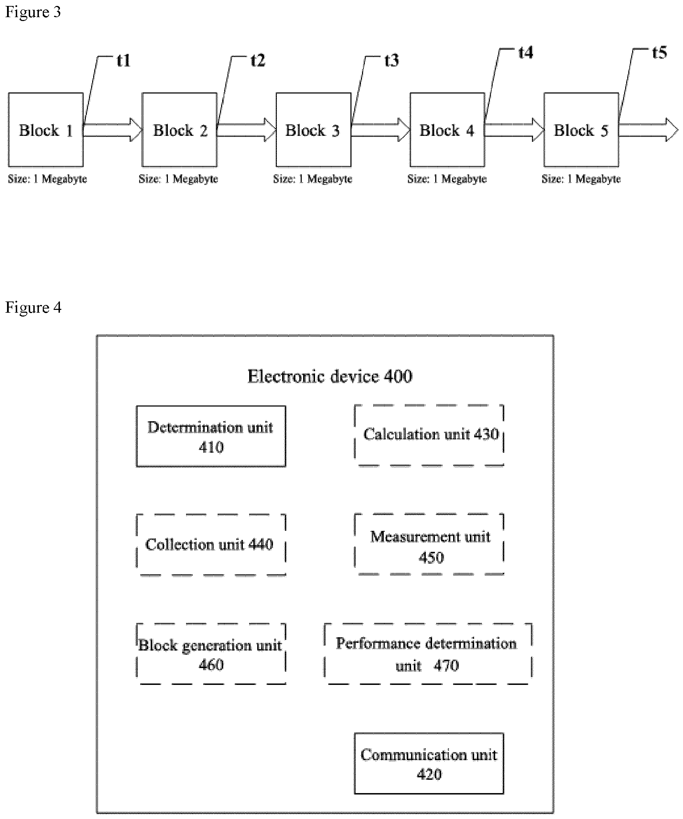

Figure 3 illustrates a structure of a blockchain. In conventional blockchain technology, a block has a fixed size, and an interval between generation times of adjacent blocks is fixed. Figure 3 illustrates five blocks, each of which has a size of 1 megabyte. An interval between a generation time t2 of block 2 and a generation time t1 of block 1, an interval between a generation time t3 of block 3 and a generation time t2 of block 2, an interval between a generation time t4 of block 4 and a generation time t3 of block 3, and an interval between a generation time t5 of block 5 and a generation time t4 of block 4 are equal to each other.

As described above, the fixed size of the block may result in a lower probability of a successful transmission of the block and excessive consumption of storage space at respective nodes. The fixed interval between the generation times of the blocks may result in a limited processing speed for transactions. Therefore, requirements of wireless communication are not satisfied.

In regard to such a scenario, an electronic device in a wireless communication system, a wireless communication method executed by the electronic device in the wireless communication system, and a computer-readable storage medium are provided according to the present disclosure, which can improve the processing speed of spectrum transactions and reduce the storage overhead at respective nodes while applying blockchain technology to spectrum management.

The wireless communication system according to the present disclosure may be a 5G NR (New Radio) communication system. The wireless communication system may include a plurality of electronic devices that use a blockchain to record spectrum transaction information in the wireless communication system. That is, each block may include information related to a plurality of spectrum transactions. Each spectrum transaction indicates that a trade of spectrum is conducted between two electronic devices in the wireless communication system. The spectrum transaction information may include transaction parties, transaction price, spectrum involved in the transaction, and transaction time, and other necessary information related to the spectrum transaction.

Further, the wireless communication system according to the present disclosure may include a wireless communication environment. For example, the wireless communication environment is any one of Wi-Fi, massive MIMO, Ultra-Dense Network, drone base station, macro base station, micro base station, D2D, and V2X, as shown in Figure 1. The wireless communication environment may include other wireless communication environments, which is not limited in the present disclosure. That is, a plurality of spectrum management nodes in the wireless communication environment may use a blockchain to record spectrum transaction information in the wireless communication environment. It is to be noted that, any of the spectrum management nodes may be located in one or more wireless communication environments.

The electronic device described hereinafter in the present disclosure may be a node with a spectrum management function in the wireless communication system. In other words, an electronic device according to the present disclosure owns spectrum and can perform a spectrum transaction with other electronic devices. For example, the electronic device may be a network side device, and can provide a spectrum management service to one or more user equipment. Alternatively, the electronic device may be a spectrum management node provided in the wireless communication system and independent of a network side device, and can provide a spectrum management service to one or more UEs. Moreover, the electronic device may be user equipment in the wireless communication system, and can provide a spectrum management service to one or more other UEs. That is, the electronic device according to the present disclosure may be any electronic device having a spectrum management function.

The network side device according to the present disclosure may be a base station device. For example, the network side device may be an eNB or a gNB (a base station in the 5th generation communication system).

The user equipment according to the present disclosure may be a mobile terminal (such as a smart phone, a tablet personal computer (PC), a notebook PC, a portable gaming terminal, a portable/dongle type mobile router and a digital camera device) or a vehicle terminal (such as a vehicle navigation device). The user equipment may be implemented as a terminal performing machine-to-machine (M2M) communication (also known as a machine-type communication (MTC) terminal). In addition, the user equipment may be a wireless communication module (such as an integrated circuit module including a single wafer) installed on each of the above terminals.

<2. Example configuration of an electronic device having an accounting right of the Nth block>

Figure 4 is a block diagram illustrating an example configuration of an electronic device 400 according to an embodiment of the present disclosure. The electronic device 400 herein may be a node having a spectrum management function in a wireless communication system. For example, the electronic device 400 may be a network side device, and particularly operate as a base station device in the wireless communication system to provide spectrum management service to one or more UEs. Further, the wireless communication system may include a plurality of electronic devices 400 that use a blockchain to record spectrum transaction information in the wireless communication system.

As shown in Figure 4, the electronic device 400 may include a determination unit 410 and a communication unit 420.

Here, units of the electronic device 400 may be included in a processing circuitry. It is noted that the electronic device 400 may include a single processing circuit or a plurality of processing circuits. Further, the processing circuitry may include various discrete functional units to perform various different functions and/or operations. It is noted that these functional units may be physical or logical entities, and units with different designations may be implemented by the same physical entity.

According to an embodiment of the present disclosure, the determination unit 410 may determine a size of a next block and a generation time of the next block according to information related to the wireless communication environment of the wireless communication system.

According to an embodiment of the present disclosure, the electronic device 400 may transmit, via the communication unit 420, the size of the next block and the generation time of the next block determined by the determination unit 410 to other electronic devices in the wireless communication system.

As can be seen, the electronic device 400 according to the embodiment of the present disclosure can determine the size of the next block and the generation time of the next block according to the information related to the wireless communication environment of the wireless communication system. As such, the size of the block and the generation time of the block may be determined dynamically according to the wireless communication environment, thereby increasing the processing speed of spectrum transactions and reducing the storage overhead at respective nodes.

According to an embodiment of the present disclosure, the electronic device 400 may be an electronic device having an accounting right of the previous block (also referred to as block N in the present disclosure) among the a plurality of electronic devices in the wireless communication system. That is, the block N is generated and transmitted to other electronic devices by the electronic device 400. That is, according to an embodiment of the present disclosure, the size of the next block (also referred to as block N+1 in the present disclosure) and the generation time of the next block is determined by the electronic device having the accounting right of the previous block.

According to an embodiment of the present disclosure, the generation time of the next block determined by the determination unit 410 may be an absolute generation time of the next block, or may be a relative generation time of the next block, such as an interval between the generation time of the next block and the current time, or an interval between the generation time of the next block and the generation time of the previous block.

According to an embodiment of the present disclosure, the information related to a wireless communication environment of a wireless communication system may include information related to a wireless communication environment where each of the plurality of electronic devices is located. That is, the wireless communication system includes a plurality of electronic devices, and the information related to the wireless communication environment where each of the electronic devices is located may be used to indicate the information related to the wireless communication environment of the wireless communication system. The determination unit 410 may determine the size of the next block and the generation time of the next block according to the information related to the wireless communication environment where each of the electronic devices in the wireless communication system is located.

According to an embodiment of the present disclosure, as shown in Figure 4, the electronic device 400 may further include a calculation unit 430. The calculation unit is configured to determine a candidate size of the next block and a candidate generation time of the next block according to information related to a wireless communication environment in which the electronic device 400 is located.

According to an embodiment of the present disclosure, the electronic device 400 may further receive, from each of other electronic devices via the communication unit 420, a candidate size of the next block and a candidate generation time of the next block determined by the other electronic device according to information related to a wireless communication environment where the other electronic device is located.

According to an embodiment of the present disclosure, the determination unit 410 may determine the size of the next block and the generation time of the next block, according to the candidate size of the next block and the candidate generation time of the next block determined by the electronic device 400 and the candidate size of the next block and the candidate generation time of the next block determined by each of other electronic devices.

That is, each of the electronic devices in the wireless communication system may determine a candidate size of the next block and a candidate generation time of the next block according to information related to the wireless communication environment in which the electronic device is located. Therefore, the determination unit 410 can determine the size of the next block and the generation time of the next block according to the candidate size of the next block and the candidate generation time of the next block determined by each of the electronic devices. In this way, the size of the next block and the generation time of the next block are determined according to the wireless communication environment in which each electronic device of the electronic devices is located.

The calculation unit 430 is described in detail below. It should be noted that the other electronic devices may also have the calculation unit 430 and can determine the candidate size of the next block and the candidate generation time of the next block in a similar manner.

According to an embodiment of the present disclosure, the information related to the wireless communication environment where the electronic device 400 is located includes information related to unverified spectrum transactions collected by the electronic device 400 and a channel condition of the electronic device 400.

That is, the calculation unit 430 may determine the candidate size of the next block and the candidate generation time of the next block according to the information related to the unverified spectrum transactions collected by the electronic device 400 and the channel condition of the electronic device 400.

According to an embodiment of the present disclosure, the information related to unverified spectrum transactions collected by the electronic device 400 includes the number of the unverified spectrum transactions collected by the electronic device 400, and/or transaction fees of the unverified spectrum transactions collected by the electronic device 400. Here, the transaction fees indicate fees paid by both sides of transaction to an electronic device having an accounting right of the next block in a case where the unverified spectrum transactions are written into the next block by the electronic device having the accounting right of the next block.

According to an embodiment of the present disclosure, the electronic device 400 may further include a collection unit 440 configured to collect unverified spectrum transactions, as shown in Figure 4. Here, the collection unit 440 may start to collect the unverified spectrum transactions at the time when the previous block is written to the blockchain. An unverified spectrum transaction refers to a spectrum transaction which has not been verified by all electronic devices in the wireless communication system, i.e., has not been written to the blockchain, although both parties of transaction have the will to trade a spectrum. The both parties of transaction may be electronic devices in the wireless communication system. In a case where the both parties of transaction have the will to trade the spectrum, the transaction parties broadcast necessary information related to the spectrum transaction in the wireless communication system, so that other electronic devices receive the information and collect the unverified spectrum transaction. For example, the wireless communication system includes node A to node D, and the node A has the will to sell spectrum F to the node B at a price P. In this case, the node A and/or the node B broadcasts the unverified spectrum transaction in the wireless communication system, so that the node C and the node D can be informed of the unverified spectrum transaction. In addition, the node A and the node B, as transaction parties, may collect the unverified spectrum transaction. Here, the information related to the unverified spectrum transactions broadcasted by the node A and/or the node B may include for example information related to the spectrum F, information related to the price P, information related to a seller node A and information related to a buyer node B.

According to an embodiment of the present disclosure, the collection unit 440 may determine a total number of the collected unverified spectrum transactions. For example, each of the electronic devices in the wireless communication system may have the same predetermined collection time. Each of the electronic devices starts to collect the unverified spectrum transactions at the time when the previous block is written to the blockchain, keeps collecting the unverified spectrum transactions for the predetermined collection time, and determines the total number of the unverified spectrum transactions collected during the predetermined collection time. Further, the collection unit 440 may transmit the total number of the collected unverified spectrum transactions to the calculation unit 430.

According to an embodiment of the present disclosure, the collection unit 440 may further determine a transaction fee for each of the collected unverified spectrum transactions. For any one of the unverified spectrum transactions, the transaction fees indicate fees paid by both sides of transaction to an electronic device having an accounting right of the next block in a case where the unverified spectrum transaction is written into the next block by the electronic device having the accounting right of the next block. Here, the collection unit 440 may obtain information related to the transaction fees from both sides of transaction when collecting the unverified spectrum transactions. For example, in the example described above, the node A has intention to sell the spectrum F to the node B at the price P, the information related to the unverified spectrum transactions broadcasted by the node A and/or the node B may include, for example, information related to the spectrum F, information related to the price P, information related to the seller node A, information related to the buyer node B, and information related to a transaction fee T. Here, the transaction fee T indicates a fee to be paid by the node A and/or the node B to the electronic device having an accounting right of the next block in a case where the unverified spectrum transaction is written to the next block by the electronic device having the accounting right of the next block, that is , in a case where the unverified spectrum transaction is verified. Further, the collection unit 440 may transmit a sum of the transaction fees for all unverified spectrum transactions collected by the collection unit 440 to the calculation unit 430, as the information related to the transaction fees.

For example, assuming that the collection unit 440 collects two unverified spectrum transactions, whose transaction fees are T1 and T2, respectively, in a predetermined collection time, the collection unit 440 may determine that a total number of the collected unverified spectrum transactions is two and the transaction fees of the collected unverified spectrum transactions is T1+T2.

According to an embodiment of the present disclosure, the electronic device 400 may further include a measurement unit 450, as shown in Figure 4. The measurement unit 450 is configured to measure a channel condition of the electronic device 400. The channel condition includes, but is not limited to, SIR (Signal to Interference Ratio), SINR (Signal to Interference plus Noise Ratio), SNR (Signal Noise Ratio), and other parameters indicating channel quality, which are not limited in the present disclosure.

According to an embodiment of the present disclosure, the measurement unit 450 may determine the channel condition of the electronic device 400. For example, the measurement unit 450 may determine the channel condition of the electronic device 400 by measuring channel conditions between the electronic device 400 and each of the other electronic devices. For example, the measurement unit 450 may determine an average of the channel conditions between the electronic device 400 and each of the other electronic devices as the channel condition of the electronic device 400. In an embodiment, the measurement unit 450 may determine the channel condition of the electronic device 400 by measuring channel conditions between the electronic device 400 and some of the other electronic devices. For example, the measurement unit 450 may measure the channel conditions between the electronic device 400 and each of one or more other electronic devices that transmitted a block to the electronic device 400 in the past, and determine an average of the channel conditions as the channel condition of the electronic device 400. In this embodiment, the electronic device 400 had received a block from other electronic device, then the channel condition between the electronic device 400 and the other electronic device may be determined according to the reception. Alternatively, the measurement unit 450 may consider a channel condition of the electronic device 400 to be optimal by default (i.e., there is no channel fading between the electronic device 400 and the electronic device 400, so that the channel condition is optimal). A measurement unit of the other electronic device may measure a channel condition between the other electronic device and the electronic device 400, as a channel condition of the other electronic device. That is, according to an embodiment of the present disclosure, the measurement unit 450 may measure channel qualities between the electronic device 400 and some or all of the other electronic devices as an estimated channel quality of the electronic device 400. Further, the measurement unit 450 may transmit the channel condition of the electronic device 400 to the calculation unit 430.

According to an embodiment of the present disclosure, the calculation unit 430 may obtain at least one of a total number of collected unverified spectrum transactions sent from the collection unit 440, transaction fees of the unverified spectrum transactions sent from the collection unit 440, and the channel condition of the electronic device 400 sent from the measurement unit 450. Further, the calculation unit 430 may determine the candidate size of the next block and the candidate generation time of the next block according to one or more of the above parameters.

According to an embodiment of the present disclosure, the calculation unit 430 may determine the candidate size of the next block and the candidate generation time of the next block by using a neural network model. Here, an input to the neural network model includes the information related to the wireless communication environment in which the electronic device 400 is located, and an output of the neural network model includes the candidate size of the next block and the candidate generation time of the next block. The information related to the wireless communication environment in which the electronic device 400 is located includes one or more of the following: the total number of collected unverified spectrum transactions, the transaction fees of the unverified spectrum transactions, and the channel condition of the electronic device 400, as described above.

According to an embodiment of the present disclosure, the calculation unit 430 may train a neural network model, and determine the candidate size of the next block and the candidate generation time of the next block by using the trained neural network model. The neural network includes, but is not limited to, a back propagation neural network.

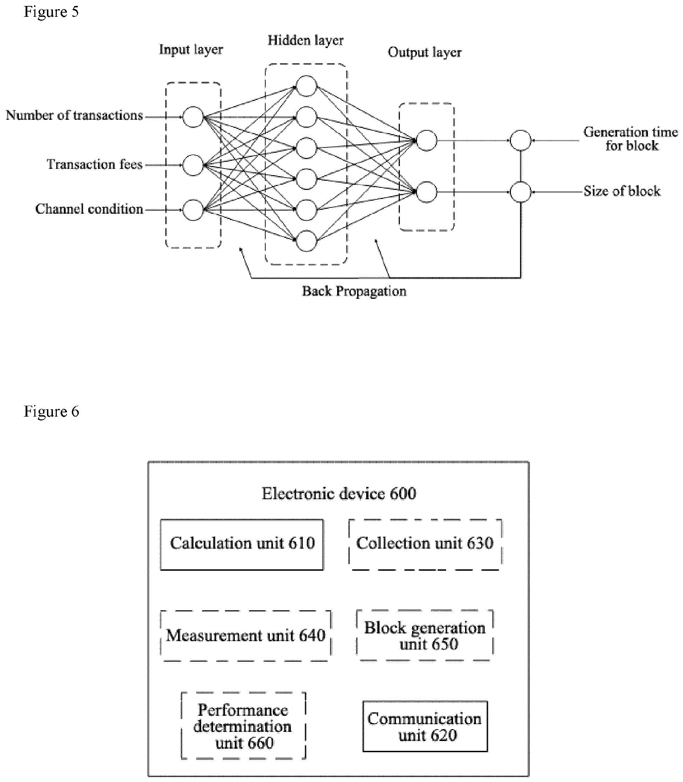

Figure 5 is a schematic diagram illustrating a process of determining a size and a generation time of a next block by using a back propagation neural network according to an embodiment of the present disclosure. As shown in Figure 5, the back propagation neural network includes an input layer, one or more hidden layers, and an output layer. Neurons in a layer are connected to neurons in a next layer. The neurons in the next layer collect information passed from the neurons in the layer. In the back propagation neural network, results propagate forward and errors propagate backward. Input parameters include the number of transactions, transaction fees, and a channel condition. Output parameters include the generation time of the next block and the size of the next block. Figure 5 illustrates a case where the input parameters include three parameters. According to an embodiment of the present disclosure, the input parameters may include one or two of the parameters, or may include more parameters as described hereinafter.

According to an embodiment of the present disclosure, the calculation unit 430 determines the candidate size of the next block and the candidate generation time of the next block so that the better the channel condition of the electronic device 400 is, the larger the candidate size of the next block is.

According to an embodiment of the present disclosure, the better the channel condition of the electronic device 400 is (for example, the larger the SINK is, the larger the SNR is, or the smaller a channel fading value is), the larger the candidate size of the next block is. The poorer the channel condition of the electronic device 400 is (for example, the smaller the SINR is, the smaller the SNR is, or the larger the channel fading value is), the smaller the candidate size of the next block is. In this way, when the channel condition is relatively poor, the size of the block is small, so as to increase a probability of a successful transmission of the block. Furthermore, when the channel condition is relatively poor, if the block is not successfully transmitted, no serious losses will be caused because of the small size of the block.

According to an embodiment of the present disclosure, the calculation unit 430 determines the candidate size of the next block and the candidate generation time of the next block so that the greater the number of the unverified spectrum transactions collected by the electronic device 400 is, the larger the candidate size of the next block is and the earlier the candidate generation time of the next block is.

According to an embodiment of the present disclosure, the greater the number of the unverified spectrum transactions collected by the electronic device 400 is, the more content included in the block is, and therefore the larger the block is. Also, the less the number of the collected unverified spectrum transactions is, the less content included in the block is, and therefore the smaller the block is. In this way, the size of the block may be determined according to the number of the unverified spectrum transactions, so as to avoid that the block is too large and thereby reduce a storage overhead of the electronic device. In addition, the greater the number of the unverified spectrum transactions collected by the electronic device 400 is, the earlier the generation time of the next block is, that is, the shorter an interval between the generation time of the next block and the generation time of the previous block is. Also, the less the number of the collected unverified spectrum transactions is, the later the generation time of the next block is. In this way, a large number of the unverified spectrum transactions can be processed as quickly as possible, so that the processing speed of the transactions is increased.

According to an embodiment of the present disclosure, the calculation unit 430 determines the candidate size of the next block and the candidate generation time of the next block, so that the higher the transaction fees of the unverified spectrum transactions collected by the electronic device 400 are, the earlier the candidate generation time of the next block is.

According to an embodiment of the present disclosure, the higher the transaction fees of the unverified spectrum transactions collected by the electronic device 400 are, the earlier the generation time of the next block is, that is, the shorter an interval between the generation time of the next block and the generation time of the previous block is. Besides, the lower the transaction fees of the collected unverified spectrum transactions are, the later the generation time of the next block is. In this way, the unverified spectrum transactions with high transaction fees can be processed as quickly as possible.

Hereinabove described is that the calculation unit 430 determines the candidate size of the next block and/or the candidate generation time of the next block according to the total number of the collected unverified spectrum transactions, the transaction fees of the unverified spectrum transactions, and the channel condition of the electronic device 400. The calculation unit 430 may determine the candidate size of the next block and/or the candidate generation time of the next block based on one or more of the above parameters.

Further, in addition to the total number of the collected unverified spectrum transactions, the transaction fees of the unverified spectrum transactions, and the channel condition of the electronic device 400, the calculation unit 430 may determine the candidate size of the next block and/or the candidate generation time of the next block according to one or more of the following parameters: a density of UEs managed by the electronic device 400, a moving speed of the UEs managed by the electronic device 400, and a sensitivity of the unverified spectrum transactions collected by the electronic device 400 to a latency. The density of UEs managed by electronic device 400 refers to a ratio of the number of the UEs managed by the electronic device 400 to a coverage of the electronic device 400. The moving speed of the LTEs managed by the electronic device 400 may refer to an average of moving speeds of the UEs managed by the electronic device 400. The sensitivity of the unverified spectrum transactions collected by the electronic device 400 to latency may refer to an average of sensitivities of the unverified spectrum transactions collected by the electronic device 400 to latency. The sensitivity to latency may be expressed, for example, by a maximum allowed latency.

For example, the calculation unit 430 may determine the candidate size of the next block and the candidate generation time of the next block, so that the larger the density of the UEs is, the larger the candidate size of the next block is and the earlier the candidate generation time of the next block is. The faster the moving speed of the UEs is, the earlier the candidate generation time of the next block is. The higher the sensitivity of the collected unverified spectrum transactions to a latency is (that is, the smaller the allowed maximum latency is), the earlier the candidate generation time of the next block is.

That is, according to an embodiment of the present disclosure, the calculation unit 430 may determine the candidate size of the next block and/or the candidate generation time of the next block according to one or more of the following parameters: the total number of the collected unverified spectrum transactions, the transaction fees of the unverified spectrum transactions, the channel condition of the electronic device 400, the density of the UEs managed by the electronic device 400, the moving speed of the UEs managed by the electronic device 400, and the sensitivity of the unverified spectrum transactions collected by the electronic device 400 to a latency.

The determination unit 410 according to the present disclosure is described in detail below.

As described above, the determination unit 410 may obtain from the calculation unit 430 the candidate size of the next block and the candidate generation time of the next block determined by the electronic device 400, and receive, from each of other electronic devices via the communication unit 420, the candidate size of the next block and the candidate generation time of the next block determined by the other electronic device. Further, the determination unit 410 may determine the size of the block and the generation time of the block according to the above information.

According to an embodiment of the present disclosure, the determination unit 410 may select an electronic device among a plurality of electronic devices (including the electronic device 400 and other electronic devices), and use the candidate size of the next block and the candidate generation time of the next block determined by the selected electronic device as the size of the next block and the generation time of the next block.

According to an embodiment of the present disclosure, the determination unit 410 may determine a score for each of the plurality of electronic devices based on at least one of the following parameters and select an electronic device with the highest score: the number of the unverified spectrum transactions collected by the electronic device, transaction fees of the unverified spectrum transactions collected by the electronic device, a sensitivity of the unverified spectrum transactions collected by the electronic device to a latency, the number of time-out spectrum transactions among the unverified spectrum transactions collected by the electronic device, a channel condition of the electronic device, and a performance of the electronic device.

As described above, the number of the unverified spectrum transactions collected by the electronic device refers to a total number of the unverified spectrum transactions collected by the electronic device from the time when the previous block is written to the blockchain to a predetermined collection time. The number of the unverified spectrum transactions collected by the electronic device 400 may be determined by the collection unit 440. The number of the unverified spectrum transactions collected by the other electronic device may be transmitted to the electronic device 400 by the other electronic device. For example, the other electronic device may transmit the number of the unverified spectrum transactions collected by the other electronic device while transmitting the candidate size of the next block and the candidate generation time of the next block to the electronic device 400.

As described above, the transaction fees of the unverified spectrum transactions collected by the electronic device refers to a sum of the transaction fees of all unverified spectrum transactions collected by the electronic device. The transaction fees of the unverified spectrum transactions collected by the electronic device 400 may be determined by the collection unit 440. The transaction fees of the unverified spectrum transactions collected by the other electronic device may be transmitted by the other electronic device to the electronic device 400. For example, the other electronic device may transmit the transaction fees of the collected unverified spectrum transactions while transmitting the candidate size of the next block and the candidate generation time of the next block to the electronic device 400.

The sensitivity of the unverified spectrum transactions collected by the electronic device to latency may indicate latency requirements of the unverified spectrum transactions collected by the electronic device. For example, the sensitivity of an unverified spectrum transaction to latency may indicate a maximum latency that the spectrum transaction can tolerate. The electronic device may express the sensitivity of the unverified spectrum transactions to latency as a function of the sensitivity of the collected unverified spectrum transactions to latency. For example, the electronic device may express the sensitivity of the unverified spectrum transactions to latency as an average of the sensitivities of the collected unverified spectrum transactions to latency. In addition, the sensitivity of the unverified spectrum transactions collected by the electronic device 400 to latency may be determined by the collection unit 440. The sensitivity of the unverified spectrum transactions collected by the other electronic device to latency may be transmitted by the other electronic device to the electronic device 400. For example, the other electronic device may transmit the sensitivity of the collected unverified spectrum transactions to latency while transmitting the candidate size of the next block and the candidate generation time of the next block to the electronic device 400.

The number of time-out spectrum transactions among the unverified spectrum transactions collected by the electronic device may refer to the number of spectrum transactions, among all unverified spectrum transactions collected by the electronic device, exceeding a maximum latency that a spectrum transaction can tolerate. The number of time-out spectrum transactions among the unverified spectrum transactions collected by the electronic device 400 may be determined by the collection unit 440. The number of time-out spectrum transactions among the unverified spectrum transactions collected by the other electronic device may be transmitted to the electronic device 400 by the other electronic device. For example, the other electronic device may transmit the number of time-out spectrum transactions among the collected unverified spectrum transactions while transmitting the candidate size of the next block and the candidate generation time of the next block to the electronic device 400.

As described above, the channel condition of the electronic device may indicate a channel quality between the electronic device and some or all of the other electronic devices. Preferably, the channel condition of the electronic device may indicate the channel quality between the electronic device and the electronic device 400, and the channel condition of the electronic device 400 may be set as the optimal value. The channel condition of the electronic device 400 may be determined by the measurement unit 450. The channel condition of the other electronic device may be transmitted to the electronic device 400 by the other electronic device. For example, the other electronic device may transmit the channel condition while transmitting the candidate size of the next block and the candidate generation time of the next block to the electronic device 400.

The performance of the electronic device may include a storage performance and a power performance of the electronic device. For example, the storage performance of the electronic device may be indicated as a size of storage space, and the power performance of the electronic device may be indicated as electricity quantity. Further, the performance of the electronic device may be indicated as a parameter that combines the storage performance and the power performance of the electronic device.

According to an embodiment of the present disclosure, the electronic device 400 may further include a performance determination unit 470, as shown in Figure 4. The performance determination unit 470 is configured to determine a performance of the electronic device 400. The performance of the electronic device 400 may be determined by the performance determination unit 470. The performance of the other electronic device may be transmitted to the electronic device 400 by the other electronic device. For example, the other electronic device may transmit the performance while transmitting the candidate size of the next block and the candidate generation time of the next block to the electronic device 400.

As described above, according to an embodiment of the present disclosure, the other electronic device may transmit to the electronic device 400 one or more of the number of the unverified spectrum transactions collected by the other electronic device, transaction fees of the unverified spectrum transactions collected by the other electronic device, the sensitivity of the unverified spectrum transactions collected by the other electronic device to a latency, the number of time-out spectrum transactions among the unverified spectrum transactions collected by other electronic device, a channel condition of the other electronic device, and a performance of the other electronic device.

According to an embodiment of the present disclosure, the above parameters may be transmitted by the other electronic device while transmitting the candidate size of the next block and the candidate generation time of the next block to the electronic device 400. Preferably, the other electronic device may transmit a virtual block to the electronic device 400. The virtual block includes only necessary information related to the block, and is not an actual block to be connected to the blockchain. The necessary information includes the size of the block and the generation time of the block. The necessary information may further include at least one of the number of the unverified spectrum transactions in the block, transaction fees of the unverified spectrum transactions in the block, a sensitivity of the unverified spectrum transactions in the block to latency, and the number of time-out spectrum transactions among the unverified spectrum transactions in the block.

That is, the other electronic device may transmit a virtual block to the electronic device 400. In an embodiment, the other electronic device may further transmit the channel condition of the other electronic device and the performance of the other electronic device to the electronic device 400. In this way, the determination unit 410 may extract various parameters from the virtual block to determine the number of the unverified spectrum transactions collected by the other electronic device, the transaction fees of the unverified spectrum transactions collected by the other electronic device, the sensitivity of the unverified spectrum transactions collected by the other electronic device to a latency, and the number of time-out spectrum transactions among the unverified spectrum transactions collected by the other electronic device.

According to an embodiment of the present disclosure, the determination unit 410 may determine a score for each of electronic devices based on the following formula:

$$S_i = \sum_{j=1}^{M} w_j A_{ij}$$

wherein i represents a serial number of the electronic device, ranging from 1 to T, and T represents a total number of electronic devices in the wireless communication system. $S_i$ represents a score of the electronic device i. j represents a serial number of a parameter, ranging from 1 to M, and M represents a total number of parameters selected by the determination unit 410 for determining the score. $w_j$ represents a weight for the parameter j in determining the score, ranging from 0 to 1. $A_{ij}$ represents a value for the parameter j of the electronic device i, ranging from 0 to 100. Besides,

$$\sum_{j=1}^{M} w_j = 1$$
.

According to an embodiment of the present disclosure, the determination unit 410 may select M parameters from the following parameters: the number of the unverified spectrum transactions collected by the electronic device, the transaction fees of the unverified spectrum transactions collected by the electronic device, the sensitivity of the unverified spectrum transactions collected by the electronic device to a latency, the number of time-out spectrum transactions among the unverified spectrum transactions collected by the electronic device, the channel condition of the electronic device, and the performance of the electronic device. Further, the determination unit 410 converts each of the parameters of the electronic devices to a value ranging from 0 to 100, determines weights for the selected parameters in determining a score, and thereby obtains a score for each of the electronic devices.

According to an embodiment of the present disclosure, when the determination unit 410 converts the parameters to the values, the greater the number of the unverified spectrum transactions collected by the electronic device is, the greater the converted value is; the greater the transaction fees of the unverified spectrum transactions collected by the electronic device are, the greater the converted value is; the greater the sensitivity of the unverified spectrum transactions collected by the electronic device to a latency is, the greater the converted value is; the greater the number of time-out spectrum transactions among the unverified spectrum transactions collected by the electronic device is, the smaller the converted value is; the better the channel condition of the electronic device is, the greater the converted value is; and the better the performance of the electronic device is, the greater the converted value is.

For example, the determination unit 410 selects the number of the unverified spectrum transactions collected by the electronic device (j=1), the transaction fees of the unverified spectrum transactions collected by the electronic device (j=2), and the channel condition of the electronic device (j=3) as parameters for determining the score, and then M=3. In addition, it is assumed that weights for the above three parameters are 0.3, 0.3 and 0.4 respectively, that is, $w_1=0.3$, $w_2=0.3$ and $w_3=0.4$. Further, for the electronic device 400 (i=1), assuming that a value corresponding to the number of the unverified spectrum transactions collected by the electronic device is 50, a value corresponding to the transaction fees of the unverified spectrum transactions collected by the electronic device is 30, and a value corresponding to the channel condition of the electronic device is 30, that is, $A_{11}=50$, $A_{12}=30$ and $A_{13}=30$, then the score for the electronic device 400 is calculated as:

$$S_1 = \sum_{j=1}^{3} w_j A_{1j} = w_1 A_{11} + w_2 A_{12} + w_3 A_{13} = 0.3 \times 50 + 0.3 \times 30 + 0.4 \times 30 = 36$$

For the other electronic device (i = 2), assuming that a value corresponding to the number of the unverified spectrum transactions collected by the electronic device is 60, a value corresponding to the transaction fees of the unverified spectrum transactions collected by the electronic device is 20, and a value corresponding to the channel condition of the electronic device is 50, that is, $A_{21}$=60, $A_{22}$=20, and $A_{23}$=50, then the score for the other electronic device is calculated as:

$$S_2 = \sum_{j=1}^{3} w_j A_{2j} = w_1 A_{21} + w_2 A_{22} + w_3 A_{23} = 0.3 \times 60 + 0.3 \times 20 + 0.4 \times 50 = 44$$

Assuming that T= 2, that is, the wireless communication system includes two electronic devices, the electronic device 400 and the above-mentioned other electronic device. The determination unit 410 may determine the other electronic device which has a higher score as the selected electronic device, and use the candidate size of the next block and the candidate generation time of the next block determined by the other electronic device as the size of the next block and the generation time of the next block.

According to an embodiment of the present disclosure, the determination unit 410 may further determine a threshold of the score, select a highest score from scores above the threshold, and use the electronic device having the highest score as the selected electronic device. In an embodiment, the determination unit 410 may classify the scores into acceptable scores and unacceptable scores by using a machine learning algorithm (including, but not limited to, a Bayesian classifier, logistic regression, a support vector machine, a back propagation neural network), and select the highest one of the acceptable scores, and then determine the electronic device having the highest score as the selected electronic device.

As described above, after the determination unit 410 determines the size of the next block and the generation time of the next block, the electronic device 400 may broadcast the size of the next block and the generation time of the next block in the wireless communication system via the communication unit 420. Therefore, other electronic devices in the wireless communication system can receive the size of the next block and the generation time of the next block.

According to an embodiment of the present disclosure, electronic devices in the wireless communication system may compete for an accounting right of the next block through a competition mechanism. The competition mechanism includes, but is not limited to, a PoW (Proof of Work) mechanism, in which a node having greater computing power has a greater possibility of obtaining the accounting right in a competition.

According to an embodiment of the present disclosure, the electronic device 400 may further include a block generation unit 460 as shown in Figure 4. In a case where the electronic device 400 obtains the accounting right of the next block, for example, through the competition mechanism, the block generation unit 460 may generate the next block according to the size of the next block and the generation time of the next block determined by the determination unit 410. Further, the electronic device 400 may transmit the next block generated by the block generation unit 460 to the other electronic devices in the wireless communication system via the communication unit 420.

As described above, according to an embodiment of the present disclosure, the size of block N+1 and the generation time of the block N+1 are determined by the electronic device having the accounting right of block N according to a wireless communication environment in the wireless communication system. The electronic device having the accounting right of the block N+1 may generate the block N+1 according to the size of the block N+1 and the generation time of the block N+1. The electronic device having the accounting right of the block N+1 may determine a size of block N+2 and a generation time of the block N+2 according to the wireless communication environment in the wireless communication system. The electronic device having the accounting right of the block N+2 may generate the block N+2 according to the size of the block N+2 and the generation time of the block N+2, and so on. That is, the size of the block and the generation time of the block are determined dynamically according to the wireless communication environment, so that the processing speed of spectrum transactions is improved and the storage overhead at respective nodes is reduced.

<3. Example configuration of an electronic device other than the electronic device having an accounting right of the Nth block>

Figure 6 is a block diagram illustrating a structure of an electronic device 600 in a wireless communication system according to an embodiment of the present disclosure. Here the electronic device 600 may be a node with a spectrum management function in the wireless communication system. For example, the electronic device 600 may be a network side device, and specifically operate as a base station device in the wireless communication system for providing spectrum management services to one or more UEs. Further, the wireless communication system includes a plurality of electronic devices that use a blockchain to record spectrum transaction information in the wireless communication system.

As shown in Figure 6, the electronic device 600 may include a calculation unit 610 and a communication unit 620.

Here, units of the electronic device 600 may be included in a processing circuitry. It is noted that the electronic device 600 may include either a single processing circuit or a plurality of processing circuits. Further, the processing circuitry may include discrete functional units for performing various different functions and/or operations. It is noted that these functional units may be physical or logical entities, and units with different designations may be implemented by the same physical entity.

According to an embodiment of the present disclosure, the calculation unit 610 may determine a candidate size of a next block and a candidate generation time of a next block according to information related to the wireless communication environment in which the electronic device 600 is located.

According to an embodiment of the present disclosure, the electronic device 600 may transmit via the communication unit 620 the determined candidate size of the next block and candidate generation time of the next block to the electronic device having an accounting right of the previous block, so that the electronic device having the accounting right of the previous block determines a size of the next block and a generation time of the next block according to the information related to the wireless communication environment of the wireless communication system.

Here, the electronic device 600 is not an electronic device having the accounting right of the previous block in the wireless communication system. As described above, according to an embodiment of the present disclosure, the electronic device 600 may determine the candidate size of the next block and the candidate generation time of the next block according to the information related to the wireless communication environment where the electronic device 600 is located. In this way, the electronic device having the accounting right of the previous block may determine the size of the next block and the generation time of the next block according to the candidate size of the next block and the candidate generation time of the next block determined by each of the electronic devices. As such, the size of the next block and the generation time of the next block are determined dynamically according to the wireless communication environment, so that the processing speed of spectrum transactions is improved, and the storage overhead at respective nodes is reduced.

According to an embodiment of the present disclosure, the information related to the wireless communication environment in which the electronic device 600 is located includes: information related to unverified spectrum transactions collected by the electronic device 600, and a channel condition of the electronic device 600.

According to an embodiment of the present disclosure, as shown in Figure 6, the electronic device 600 may further include a collection unit 630. The collection unit 630 is configured to collect the unverified spectrum transactions.

According to an embodiment of the present disclosure, as shown in Figure 6, the electronic device 600 may further include a measurement unit 640. The measurement unit 640 is configured to measure the channel condition of the electronic device 600. For example, after the electronic device 600 receives the previous block from an electronic device having the accounting right of the previous block, the measurement unit 640 may measure a channel condition between the electronic device 600 and the electronic device having the accounting right of the previous block, as the channel condition of the electronic device 600.

According to an embodiment of the present disclosure, the information related to unverified spectrum transactions collected by the electronic device 600 includes the number of the unverified spectrum transactions collected by the electronic device 600, and/or transaction fees for the unverified spectrum transactions collected by the electronic device 600. Here, the transaction fees indicate fees paid by both sides of transaction to an electronic device having an accounting right of the next block in a case where the unverified spectrum transactions are written into the next block by the electronic device having the accounting right of the next block.

According to an embodiment of the present disclosure, the calculation unit 610 may determine the candidate size of the next block and the candidate generation time of the next block, so that the better the channel condition of the electronic device is, the larger the candidate size of the next block is.

According to an embodiment of the present disclosure, the calculation unit 610 may determine the candidate size of the next block and the candidate generation time of the next block, so that the greater the number of the unverified spectrum transactions collected by the electronic device 600 is, the larger the candidate size of the next block is, and thus the earlier the candidate generation time of the next block is; and/or the higher the transaction fees of the unverified spectrum transactions collected by the electronic device 600 are, the earlier the candidate generation time of the next block is.

According to an embodiment of the present disclosure, the calculation unit 610 may determine the candidate size of the next block and the candidate generation time of the next block by using a neural network model. An input to the neural network model includes the information related to the wireless communication environment where the electronic device 600 is located, and an output of the neural network model includes the candidate size of the next block and the candidate generation time of the next block.

According to an embodiment of the present disclosure, as shown in Figure 6, the electronic device 600 may further include a performance determination unit 660 configured to determine a performance of the electronic device 600. The performance of the electronic device 600 may include a storage performance and a power performance of the electronic device 600. For example, the storage performance of the electronic device 600 may be indicated as a size of storage space, and the power performance of the electronic device 600 may be indicated as electricity quantity. Further, the performance of the electronic device 600 may be indicated as a parameter that combines the storage performance and the power performance of the electronic device.

According to an embodiment of the present disclosure, in addition to transmitting the candidate size of the next block and the candidate generation time of the next block determined by the calculation unit 610 to the electronic device having the accounting right of the previous block, the electronic device 600 may further transmit at least one of the following parameters: the number of the unverified spectrum transactions collected by the electronic device 600, transaction fees of the unverified spectrum transactions collected by the electronic device 600, a sensitivity of the unverified spectrum transactions collected by the electronic device 600 to a latency, the number of time-out spectrum transactions among the unverified spectrum transactions collected by the electronic device 600, a channel condition of the electronic device 600, and a performance of the electronic device 600.

According to an embodiment of the present disclosure, the above parameters may be transmitted simultaneously when the electronic device 600 transmits the candidate size of the next block and the candidate generation time of the next block to the electronic device having the accounting right of the previous block. Preferably, the electronic device 600 may transmit a virtual block to the electronic device having the accounting right of the previous block. The virtual block includes only necessary information related to the block, and is not an actual block to be connected to the blockchain. The necessary information includes the size of the block and the generation time of the block. The necessary information may further include at least one of the number of the unverified spectrum transactions in the block, transaction fees of the unverified spectrum transactions in the block, a sensitivity of the unverified spectrum transactions in the block to latency, and the number of time-out spectrum transactions among the unverified spectrum transactions in the block.

The calculation unit 610 of the electronic device 600 may have the same or similar functionality as the calculation unit 430 of the electronic device 400. The collection unit 630 of the electronic device 600 may have the same or similar functionality as the collection unit 440 of the electronic device 400. The measurement unit 640 of the electronic device 600 may have the same or similar functionality as the measurement unit 450 of the electronic device 400. The performance determination unit 660 of the electronic device 600 may have the same or similar functionality as the performance determination unit 470 of the electronic device 400. The units are not described in further detail here.

According to an embodiment of the present disclosure, the electronic device 600 may receive, via the communication unit 620, the size of the next block and the generation time of the next block from the electronic device having the accounting right of the previous block.

According to an embodiment of the present disclosure, as shown in Figure 6, the electronic device 600 may further include a block generation unit 650. The block generation unit 650 is configured to generate the next block according to the received size of the next block and generation time of the next block, in a case where the electronic device 600 obtains the accounting right of the next block. Further, the electronic device 600 may transmit, via the communication unit 620, the generated next block to other electronic devices in the wireless communication system.

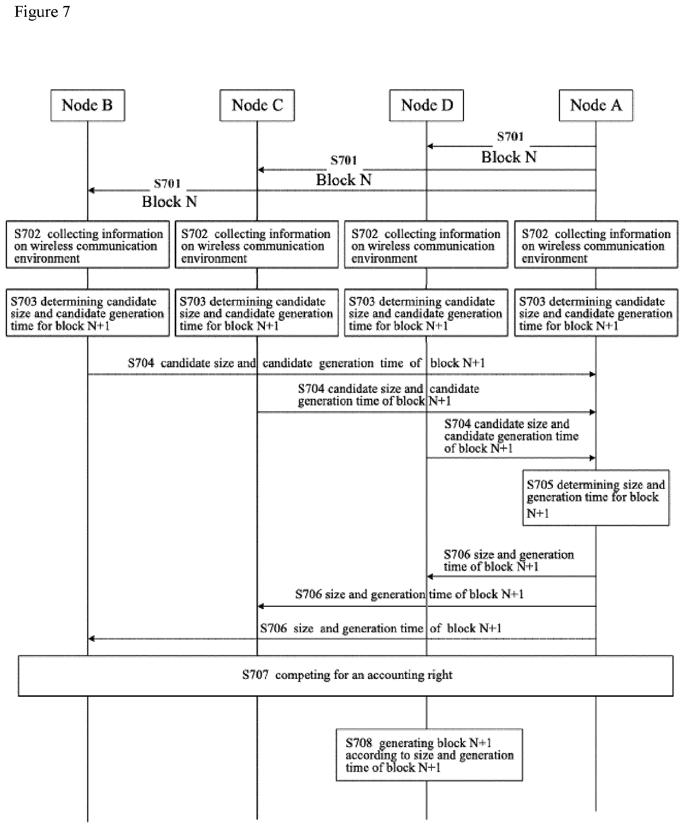

Figure 7 is a signaling flowchart illustrating a process of recording spectrum transaction information by using blockchain technology according to an embodiment of the present disclosure. In Figure 7, a wireless communication system includes node A, node B, node C, and node D. The node A has an accounting right of the previous block, and may be implemented by the electronic device 400. The node B, the node C, and the node D are other nodes in the wireless communication system, which may be implemented by the electronic device 600. In step S701, the node A broadcasts block N. In step S702, each of the node A, the node B, the node C and the node D collects information related to the wireless communication environment in which the node is located. In step S703, each of the node A, the node B, the node C and the node D determines a candidate size and a candidate generation time of block N+1 according to the information related to the wireless communication environment where the node is located. In step S704, each of the node B, the node C and the node D transmits the determined candidate size and candidate generation time of the block N+1 to the node A. In step S705, the node A determines the size and the generation time of the block N+1 according to the candidate size and the candidate generation time of the block N+1 determined by each of the node A, the node B, the node C and the node D. In step S706, the node A broadcasts the determined size and generation time of the block N+1. In step S707, the node A, the node B, the node C and the node D determine an accounting right of the block N+1 through a competition mechanism. Here, it is assumed that the node D obtains the accounting right of the block N+1. In step S708, the node D generates the block N+1 according to the received size and generation time of the block N+1. As described above, the size and the generation time of the block N+1 is determined dynamically by the node A having the accounting right of the block N according to the wireless communication environment.

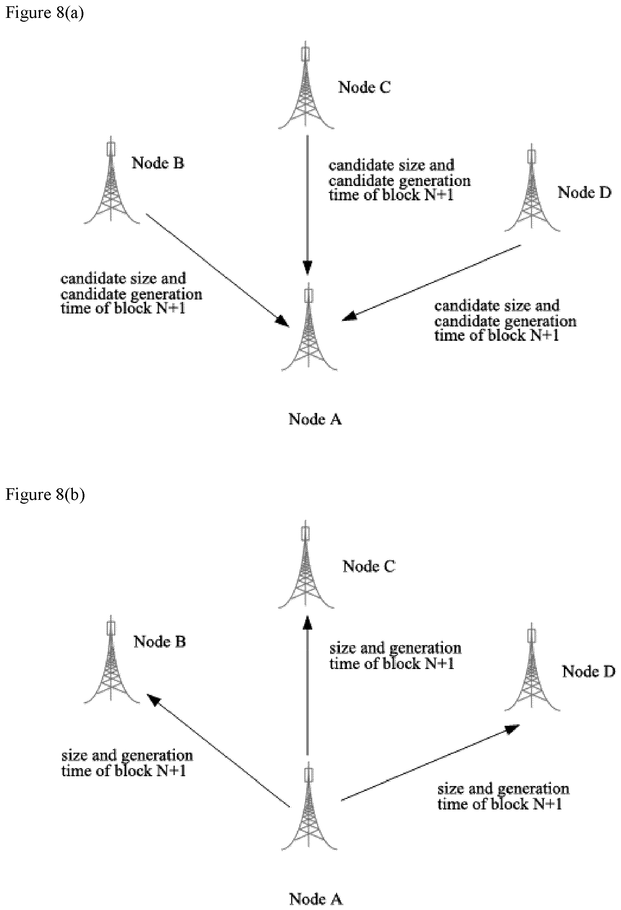

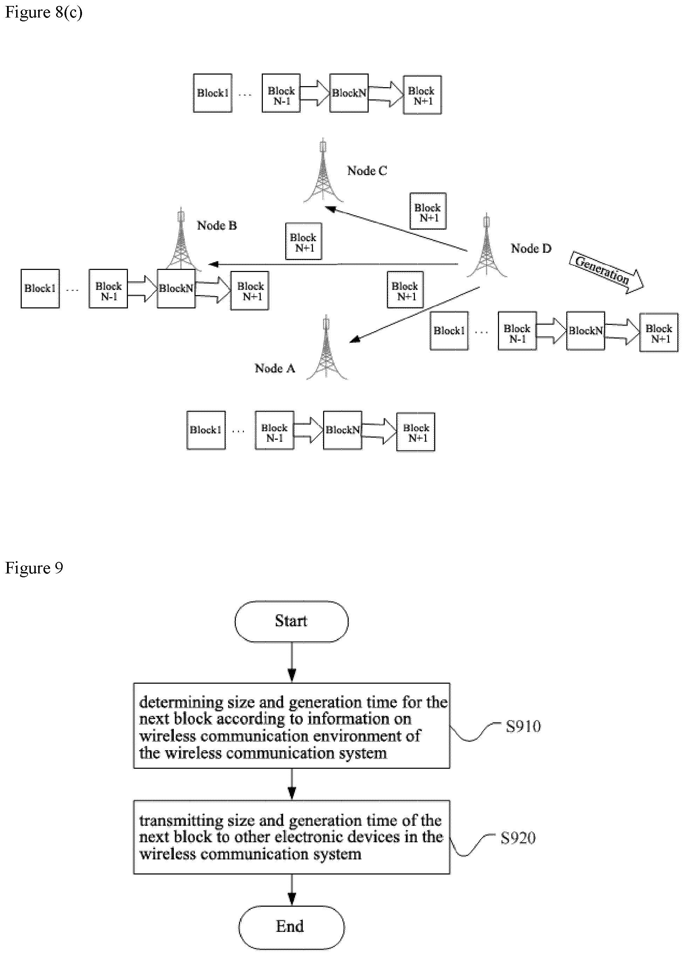

Figure 8(a) to Figure 8(c) are schematic diagrams each illustrating a process pf recprdomg spectrum transaction information by using blockchain technology according to an embodiment of the present disclosure. As shown in Figure 8(a), the node B transmits the candidate size and the candidate generation time of the block N+1 determined by the node B to the node A, the node C transmits the candidate size and the candidate generation time of the block N+1 determined by the node C to the node A, and the node D transmits the candidate size and the candidate generation time of the block N+1 determined by the node D to the node A. As shown in Figure 8(b), after the node A determines the size and the generation time of the block N+1, the node A broadcasts the size and the generation time of the block N+1, and the node B, the node C and the node D can obtain the size and the generation time of the block N+1. As shown in Figure 8(c), assuming that the node D obtains the accounting right of the block N+ 1, the node D generates and broadcasts the block N+ 1. After obtaining the block N+1, the node A, the node B and the node C each link the block N+1 to the corresponding blockchain stored thereon, and the node D links the block N+1 to the stored blockchain. In this way, blockchains stored at all nodes in the wireless communication system are updated.

Although the electronic device 400 having the accounting right of the Nth block and the electronic device 600 not having the accounting right of the Nth block are described above independently, the node having the accounting right of the Nth block is not necessarily the node having the accounting right of the (N+1)th block. That is, a spectrum management node in the wireless communication system may have both a structure of electronic device 400 and a structure of electronic device 600. In other words, in a case where the spectrum management node has the accounting right of the previous block, the spectrum management node may perform the corresponding function based on the structure of the electronic device 400. In a case where the spectrum management node does not have the accounting right of the previous block, the spectrum management node may perform the corresponding function based on the structure of the electronic device 600.

<4. Method Embodiment

A wireless communication method executed by an electronic device 400 in a wireless communication system according to an embodiment of the present disclosure is described in detail below.

Figure 9 is a flowchart illustrating a wireless communication method executed by an electronic device 400 in a wireless communication system according to an embodiment of the present disclosure.

Reference is made to Figure 9. In step S910, a size of a next block and a generation time of the next block are determined according to information related to a wireless communication environment of the wireless communication system.

In step S920, the size of the next block and the generation time of the next block are transmitted to other electronic devices in the wireless communication system.

Preferably, the information related to the wireless communication environment of the wireless communication system includes information related to a wireless communication environment where each of the plurality of electronic devices is located.

Preferably, the wireless communication method further includes: determining a candidate size of the next block and a candidate generation time of the next block according to the information related to the wireless communication environment where the electronic device is located; receiving from each of the other electronic devices a candidate size of the next block and a candidate generation time of the next block which are determined by the other electronic device according to information related to a wireless communication environment where the other electronic device is located; and determining a size of the next block and a generation time of the next block according to the candidate size of the next block and the candidate generation time of the next block which are determined by the electronic device and the candidate size of the next block and the candidate generation time of the next block which are determined by each of the other electronic devices.

Preferably, the information related to the wireless communication environment where the electronic device is located includes information related to unverified spectrum transactions collected by the electronic device, and a channel condition of the electronic device.

Preferably, the information related to the unverified spectrum transactions collected by the electronic device includes the number of the unverified spectrum transactions collected by the electronic device, and/or transaction fees of the unverified spectrum transactions collected by the electronic device. The transaction fees indicate fees paid by both sides of transaction to an electronic device having an accounting right of the next block in a case where the unverified spectrum transactions are written into the next block by the electronic device having the accounting right of the next block.

Preferably, the candidate size of the next block and the candidate generation time of the next block are determined so that the better the channel condition of the electronic device is, the larger the candidate size of the next block is.

Preferably, the candidate size of the next block and the candidate generation time of the next block are determined so that the greater the number of the unverified spectrum transactions collected by the electronic device is, the larger the candidate size of the next block is and the earlier the candidate generation time of the next block is; and/or the higher the transaction fees of the unverified spectrum transactions collected by the electronic device are, the earlier the candidate generation time of the next block is.

Preferably, the step of determining the candidate size of the next block and the candidate generation time of the next block includes determining the candidate size of the next block and the candidate generation time of the next block by using a neural network model. An input to the neural network model includes the information related to the wireless communication environment where the electronic device is located, and an output of the neural network model includes the candidate size of the next block and the candidate generation time of the next block.

Preferably, the step of determining the candidate size of the next block and the candidate generation time of the next block includes selecting an electronic device among the plurality of electronic devices, and using the candidate size of the next block and the candidate generation time of the next block determined by the selected electronic device as the size of the next block and the generation time of the next block.

Preferably, the wireless communication method further includes determining a score for each of the plurality of electronic devices according to at least one of the following parameters and selecting an electronic device with the highest score: the number of unverified spectrum transactions collected by the electronic device, transaction fees of the unverified spectrum transactions collected by the electronic device, a sensitivity of the unverified spectrum transactions collected by the electronic device to a latency, the number of time-out spectrum transactions among the unverified spectrum transactions collected by the electronic device, a channel condition of the electronic device, and a performance of the electronic device.

Preferably, the wireless communication method further includes: generating the next block according to the size of the next block and the generation time of the next block, in a case where the electronic device obtains an accounting right of the next block; and transmitting the next block to other electronic devices in the wireless communication system.

According to an embodiment of the present disclosure, the method described above may be performed by the electronic device 400 according to an embodiment of the present disclosure, and all the foregoing embodiments of the electronic device 400 are applicable here.

A wireless communication method executed by the electronic device 600 in a wireless communication system according to an embodiment of the present disclosure will be described in detail below.

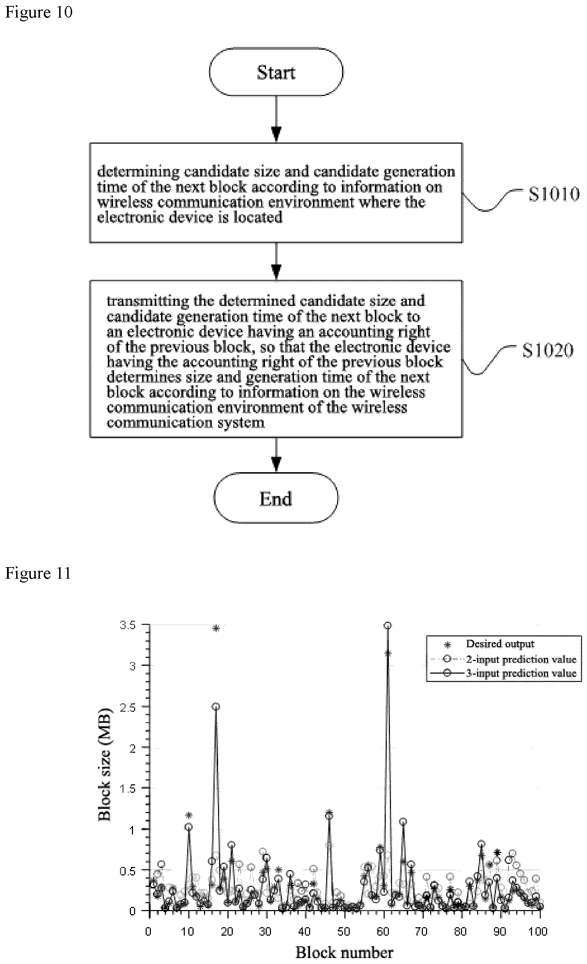

Figure 10 is a flowchart illustrating a wireless communication method executed by an electronic device 600 in a wireless communication system according to an embodiment of the present disclosure.

Reference is made to Figure 10. In step S 1010, a candidate size of a next block and a candidate generation time of the next block are determined according to information related to a wireless communication environment where the electronic device is located.

In step S 1020, the determined candidate size of the next block and candidate generation time of the next block are transmitted to an electronic device having an accounting right of the previous block, so that the electronic device having the accounting right of the previous block determines a size of the next block and a generation time of the next block according to information related to a wireless communication environment of the wireless communication system.

Preferably, the information related to the wireless communication environment where the electronic device is located includes: information related to unverified spectrum transactions collected by the electronic device, and a channel condition of the electronic device.

Preferably, the information related to the unverified spectrum transactions collected by the electronic device includes the number of the unverified spectrum transactions collected by the electronic device, and/or transaction fees of the unverified spectrum transactions collected by the electronic device. The transaction fees indicate fees paid by both sides of transaction to an electronic device having an accounting right of the next block in a case where the unverified spectrum transactions are written into the next block by the electronic device having the accounting right of the next block.

Preferably, the candidate size of the next block and the candidate generation time of the next block are determined so that the better the channel condition of the electronic device is, the larger the candidate size of the next block is.

Preferably, the candidate size of the next block and the candidate generation time of the next block are determined so that the greater the number of the unverified spectrum transactions collected by the electronic device is, the larger the candidate size of the next block is and the earlier the candidate generation time of the next block is; and/or the higher the transaction fees of the unverified spectrum transactions collected by the electronic device are, the earlier the candidate generation time of the next block is.

Preferably, the step of determining the candidate size of the next block and the candidate generation time of the next block includes determining the candidate size of the next block and the candidate generation time of the next block by using a neural network model. An input to the neural network model includes the information related to the wireless communication environment where the electronic device is located, and an output of the neural network model includes the candidate size of the next block and the candidate generation time of the next block.

Preferably, the wireless communication method further includes: receiving, from the electronic device having the accounting right of the previous block, the size of the next block and the generation time of the next block; generating the next block according to the size of the next block and the generation time of the next block, in a case where the electronic device obtains an accounting right of the next block; and transmitting the next block to other electronic devices in the wireless communication system.

According to an embodiment of the present disclosure, the method described above may be performed by the electronic device 600 according to an embodiment of the present disclosure, and all the foregoing embodiments of the electronic device 600 are applicable here.

<5. Simulation Embodiment>

To better illustrate technical effects of the present disclosure, schematic diagrams illustrating simulations of the technical solution according to the present disclosure are described below in conjunction with Figures 11 to 22.

Simulation parameters are shown in the below table. In the simulation scenario, the number of the unverified transactions in a transaction pool of each node ranges from 0 to 300. A wireless channel model between the nodes is a Rayleigh channel. A channel fading value ranges from -10dB to 10dB. A maximum Doppler shift is set to 454Hz. A frequency is set to a frequency of 4.9GHz of a 5G mobile communication system. A moving speed of a node ranges from 0km/h to 100km/h. The transaction fees range from 1.0 to 46.0 in unit of Gwei. The smallest unit of Ether coins is wei, and 1Gwei = $10^9$wei.

| Parameter | Value of Parameter |
|---|---|
| Number of transactions | 0 - 300 |
| Transaction fees | 1.0 - 46.0 Gwei |
| Channel model | Rayleigh fading |
| Maximum Doppler shift | 454Hz |
| Frequency | 4.9GHz |
| Speed | 1 - 100km/h |
| Channel fading | -10 - 10dB |
| Block generation time | 3 - 35s |
| Block size | 0.02 - 2.3MB |

Figures 11-15 are simulation schematic diagrams illustrating an effect of a channel condition of an electronic device on determination of a size or a generation time of a block according to an embodiment of the present disclosure.

Figure 11 is a simulation schematic diagram illustrating an effect of a channel condition of an electronic device on determination of a size of a block according to an embodiment of the present disclosure. In Figure 11, the horizontal axis represents a block number and the vertical axis represents the determined size of the block. A 2-input prediction value indicates a size of the block determined in consideration of only the number of unverified spectrum transactions collected by the electronic device and transaction fees of the unverified spectrum transactions collected by the electronic device, without considering a channel condition of the electronic device. A 3-input prediction value indicates the size of the block determined in consideration of the channel condition of the electronic device, the number of the unverified spectrum transactions collected by the electronic device, and the transaction fees of the unverified spectrum transactions collected by the electronic device. As shown in Figure 11, the size of the block determined in consideration of the channel condition of the electronic device is closer to the desired output, i.e., an ideal value.

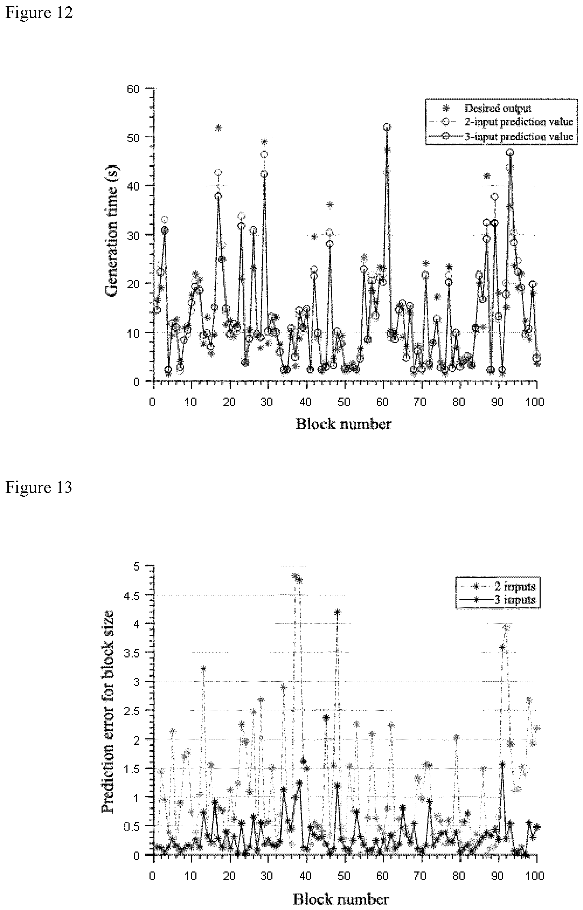

Figure 12 is a simulation schematic diagram illustrating an effect of a channel condition of an electronic device on determination of a generation time of a block according to an embodiment of the present disclosure. In Figure 12, the horizontal axis represents a block number and the vertical axis represents the determined generation time of the block. A 2-input prediction value indicates a generation time of the block determined in consideration of only the number of unverified spectrum transactions collected by the electronic device and transaction fees of the unverified spectrum transactions collected by the electronic device, without considering a channel condition of the electronic device. A 3-input prediction value indicates the generation time of the block determined in consideration of the channel condition of the electronic device, the number of the unverified spectrum transactions collected by the electronic device, and the transaction fees of the unverified spectrum transactions collected by the electronic device. As shown in Figure 12, the generation time of the block determined in consideration of the channel condition of the electronic device is closer to the desired output, i.e., an ideal value.

Figure 13 is a simulation schematic diagram illustrating an effect of a channel condition of an electronic device on determination of a size of a block according to an embodiment of the present disclosure. In Figure 13, the horizontal axis represents block number and the vertical axis represents prediction error for determined size of the block. A 2-input prediction value indicates prediction error for a size of the block determined in consideration of only the number of unverified spectrum transactions collected by the electronic device and transaction fees of the unverified spectrum transactions collected by the electronic device, without considering a channel condition of the electronic device. A 3-input prediction value indicates prediction error for the size of the block determined in consideration of the channel condition of the electronic device, the number of the unverified spectrum transactions collected by the electronic device, and the transaction fees of the unverified spectrum transactions collected by the electronic device. As shown in Figure 13, the prediction error for the size of the block determined in consideration of the channel condition of the electronic device is smaller.

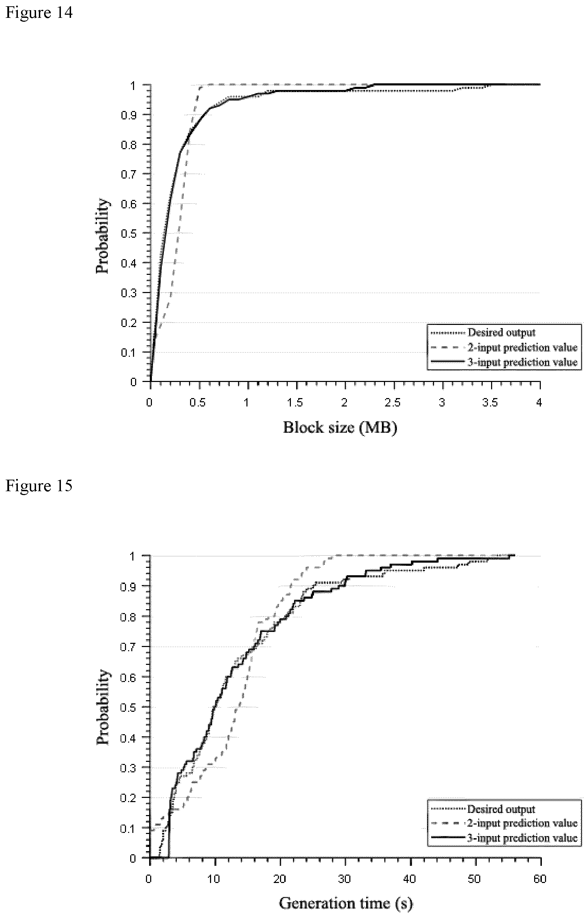

Figure 14 is a simulation schematic diagram illustrating an effect of a channel condition of an electronic device on determination of a size of a block according to an embodiment of the present disclosure. In Figure 14, the horizontal axis represents a size of a block and the vertical axis represents a CDF curve for the determined size of the block. A 2-input prediction value indicates the CDF curve for the size of the block determined in consideration of only the number of unverified spectrum transactions collected by the electronic device and transaction fees of the unverified spectrum transactions collected by the electronic device, without considering a channel condition of the electronic device. A 3-input prediction value indicates the CDF curve for the size of the block determined in consideration of the channel condition of the electronic device, the number of the unverified spectrum transactions collected by the electronic device, and the transaction fees of the unverified spectrum transactions collected by the electronic device. As shown in Figure 14, the CDF curve for the size of the block determined in consideration of the channel condition of the electronic device is closer to the desired output, i.e., an ideal value.

Figure 15 is a simulation schematic diagram illustrating an effect of a channel condition of an electronic device on determination of a generation time of a block according to an embodiment of the present disclosure. In Figure 15, the horizontal axis represents a generation time of the block and the vertical axis represents a CDF curve for the determined generation time of the block. A 2-input prediction value indicates the CDF curve for the generation time of the block determined in consideration of only the number of unverified spectrum transactions collected by the electronic device and transaction fees of the unverified spectrum transactions collected by the electronic device, without considering a channel condition of the electronic device. A 3-input prediction value indicates the CDF curve for the generation time of the block determined in consideration of the channel condition of the electronic device, the number of the unverified spectrum transactions collected by the electronic device, and the transaction fees of the unverified spectrum transactions collected by the electronic device. As shown in Figure 15, the CDF curve for the generation time of the block determined in consideration of the channel condition of the electronic device is closer to the desired output, i.e., an ideal value.

As can be seen from Figures 11 to 15, the size and generation time of the block determined in consideration of the channel condition of the electronic device are closer to the desired values. Therefore, the size and the generation time of the block can be determined more accurately according to the channel condition of the electronic device.

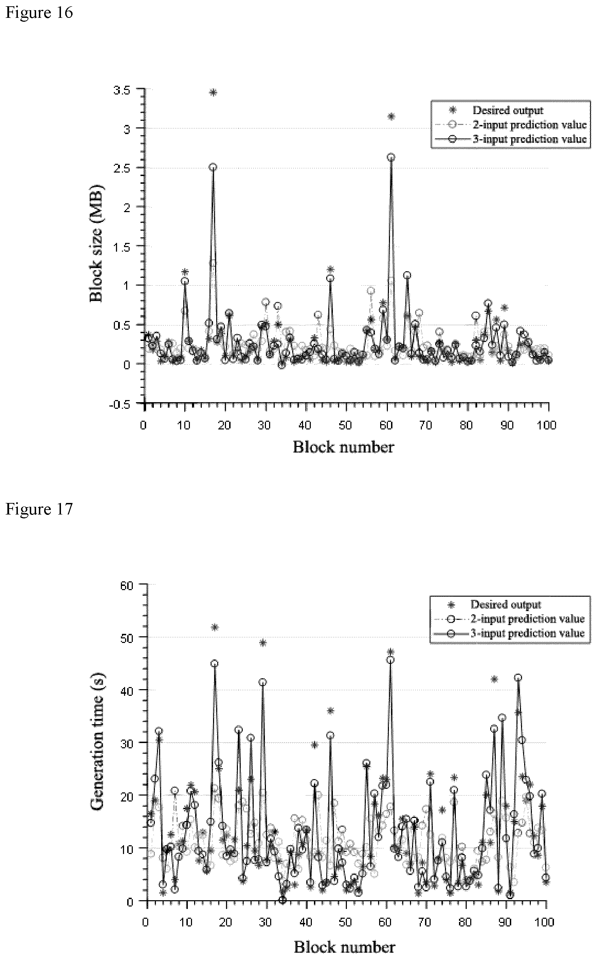

Figures 16 to 20 are simulation schematic diagrams each illustrating an effect of transaction fees on determination of a size or generation time of a block according to an embodiment of the present disclosure.

Figure 16 is a simulation schematic diagram illustrating an effect of transaction fees on determination of a size of a block according to an embodiment of the present disclosure. In Figure 16, the horizontal axis represents a block number and the vertical axis represents the determined size of the block. A 2-input prediction value indicates the the size of the block determined in consideration of only the number of unverified spectrum transactions collected by the electronic device and a channel condition of the electronic device, without considering transaction fees of the unverified spectrum transactions collected by the electronic device. A 3-input prediction value indicates the size of the block determined in consideration of the channel condition of the electronic device, the number of the unverified spectrum transactions collected by the electronic device, and the transaction fees of the unverified spectrum transactions collected by the electronic device. As shown in Figure 16, the size of the block determined in consideration of the transaction fees of the unverified spectrum transactions collected by the electronic device is closer to the desired output, i.e., an ideal value.

Figure 17 is a simulation schematic diagram illustrating an effect of transaction fees on determination of a generation time of a block according to an embodiment of the present disclosure. In Figure 17, the horizontal axis represents a block number and the vertical axis represents the determined generation time of the block. A 2-input prediction value indicates a generation time of the block determined in consideration of only the number of unverified spectrum transactions collected by the electronic device and a channel condition of the electronic device, without considering transaction fees of the unverified spectrum transactions collected by the electronic device. A 3-input prediction value indicates the generation time of the block determined in consideration of the channel condition of the electronic device, the number of the unverified spectrum transactions collected by the electronic device, and the transaction fees of the unverified spectrum transactions collected by the electronic device. As shown in Figure 17, the generation time of the block determined in consideration of the transaction fees of the unverified spectrum transactions collected by the electronic device is closer to the desired output, i.e. an ideal value.

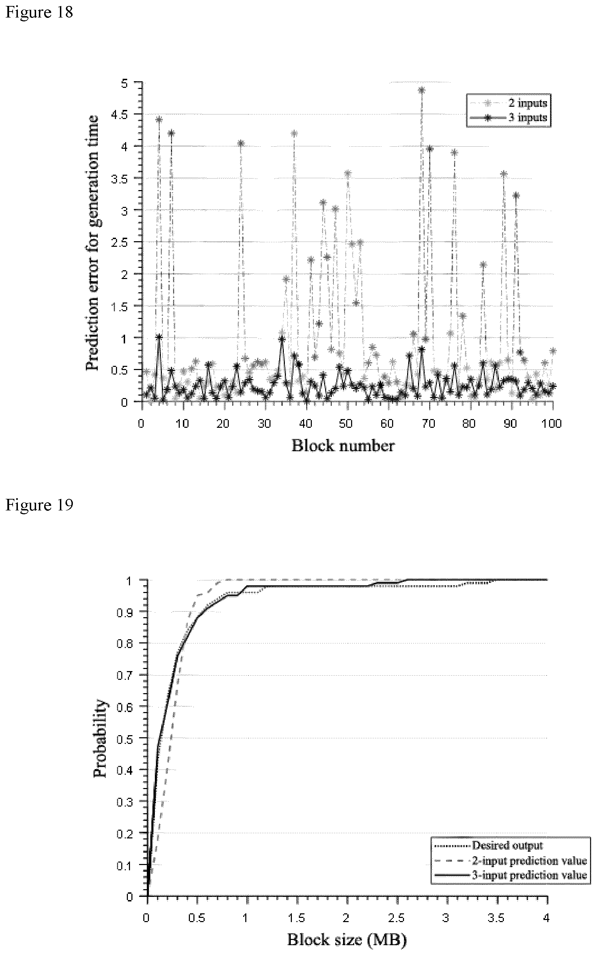

Figure 18 is a simulation schematic diagram illustrating an effect of transaction fees on determination of a generation time of a block according to an embodiment of the present disclosure. In Figure 18, the horizontal axis represents block number and the vertical axis represents prediction error for the determined generation time of the block. A 2-input prediction value indicates an error for a generation time of the block determined in consideration of only the number of unverified spectrum transactions collected by the electronic device and a channel condition of the electronic device, without considering transaction fees of the unverified spectrum transactions collected by the electronic device. A 3-input prediction value indicates an error for the generation time of the block determined in consideration of the channel condition of the electronic device, the number of the unverified spectrum transactions collected by the electronic device, and the transaction fees of the unverified spectrum transactions collected by the electronic device. As shown in Figure 18, the error for the generation time of the block determined in consideration of the transaction fees of the unverified spectrum transactions collected by the electronic device is smaller.

Figure 19 is a simulation schematic diagram illustrating an effect of transaction fees on determination of a size of a block according to an embodiment of the present disclosure. In Figure 19, the horizontal axis represents a size of the block and the vertical axis represents a CDF curve for the determined size of the block. A 2-input prediction value indicates the CDF curve for the size of the block determined in consideration of only the number of unverified spectrum transactions collected by the electronic device and a channel condition of the electronic device, without considering transaction fees of the unverified spectrum transactions collected by the electronic device. A 3-input prediction value indicates the CDF curve for the size of the block determined in consideration of the channel condition of the electronic device, the number of the unverified spectrum transactions collected by the electronic device, and the transaction fees of the unverified spectrum transactions collected by the electronic device. As shown in Figure 19, the CDF curve for the size of the block determined in consideration of the transaction fees of the unverified spectrum transactions collected by the electronic device is closer to the desired output, i.e., an ideal value.

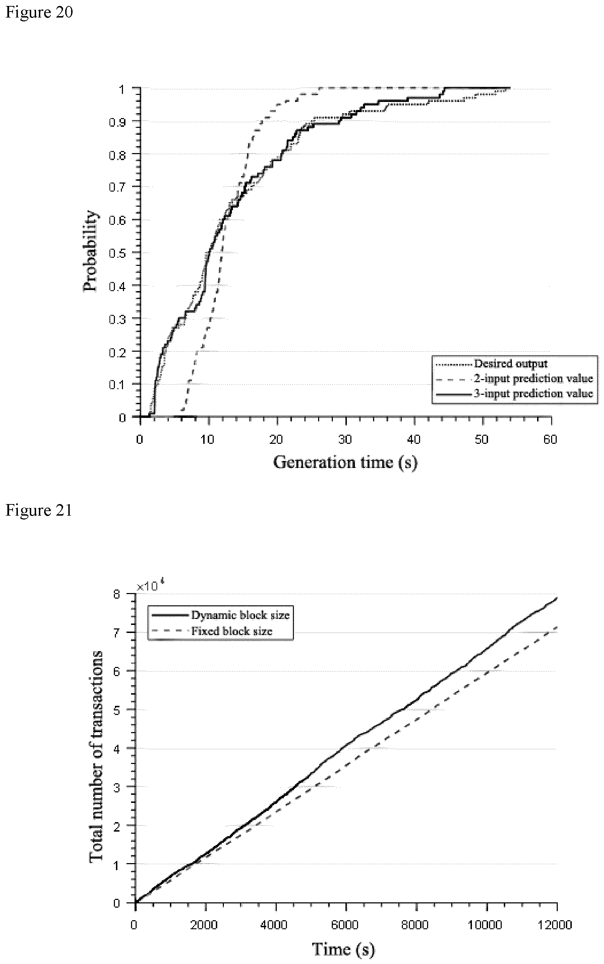

Figure 20 is a simulation schematic diagram illustrating an effect of transaction fees on determination of a generation time of a block according to an embodiment of the present disclosure. In Figure 20, the horizontal axis represents a generation time of the block and the vertical axis represents a CDF curve for the determined generation time of the block. A 2-input prediction value indicates the CDF curve for the generation time of the block determined in consideration of only the number of unverified spectrum transactions collected by the electronic device and a channel condition of the electronic device, without considering transaction fees of the unverified spectrum transactions collected by the electronic device. A 3-input prediction value indicates the CDF curve for the generation time of the block determined in consideration of the channel condition of the electronic device, the number of the unverified spectrum transactions collected by the electronic device, and the transaction fees of the unverified spectrum transactions collected by the electronic device. As shown in Figure 20, the CDF curve for the generation time of the block determined in consideration of the transaction fees of the unverified spectrum transactions collected by the electronic device is closer to the desired output, i.e., an ideal value.

As can be seen from Figures 16 to 20, the size and generation time of the block determined in consideration of the transaction fees of the unverified spectrum transactions collected by the electronic device are closer to the desired values. Therefore, the size and the generation time of the block can be determined more accurately according to the transaction fees of the unverified spectrum transactions collected by the electronic device.

Figure 21 is a simulation schematic diagram illustrating an effect of a variable block size on a processing speed of transactions according to an embodiment of the present disclosure. In Figure 21, the horizontal axis represents time and the vertical axis represents a total number of transactions processed. Fixed block size indicates a total number of transactions that can be processed in a case of the fixed size of the block in the conventional blockchain technology. Dynamic block size indicates a total number of transactions that can be processed in a case of a variable size of the block in the blockchain technology according to an embodiment of the present disclosure. As shown in Figure 21, during the same time period, more transactions can be processed with a scheme adopting the dynamic size of a block than a scheme adopting a fixed size of a block. That is, the scheme adopting a dynamic size of a block can realize a greater processing speed of transactions. Therefore, the processing speed of spectrum transactions can be improved according to the embodiment of the present disclosure.

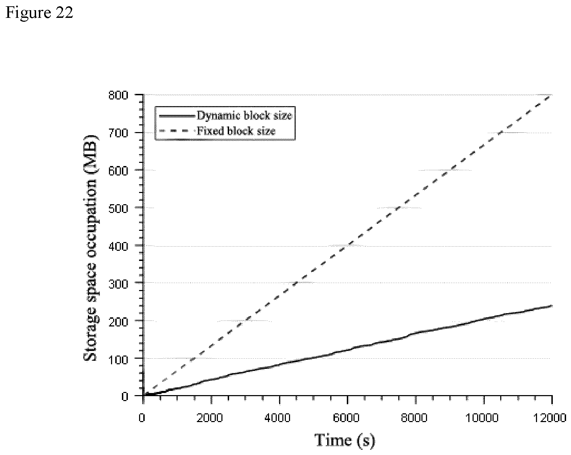

Figure 22 is a simulation schematic diagram illustrating an effect of a variable size of a block on the consumption of storage space of an electronic device according to an embodiment of the present disclosure. In Figure 22, the horizontal axis represents time and the vertical axis represents a size of occupied storage space. Fixed block size indicates a size of occupied storage space in a case that the size of the block is fixed in the conventional blockchain technology. Dynamic block size indicates a size of occupied storage space in a case that the size of the block is variable in the blockchain technology according to an embodiment of the present disclosure. As shown in Figure 22, during the same time period, less storage space is occupied with a scheme adopting a dynamic block size than a scheme adopting a fixed block size. Therefore, the overhead of the storage space can be reduced according to the embodiment of the present disclosure.

<6. Application Example>

The technology of the present disclosure can be applied to various products.

For example, a network side device may be implemented as any type of base station device, such as a macro eNB or a small eNB, and may be implemented as any type of gNB (a base station in a 5G system). The small eNB may be an eNB, such as a pico eNB, a micro eNB and a home (femto-cell) eNB, having a smaller coverage range than a macro cell. Alternatively, the base station may also be implemented as any other type of base stations, such as a NodeB and a base transceiver station (BTS). The base station may include a body (also referred to as a base station device) configured to control wireless communications, and one or more remote radio heads (RRHs) arranged in a different position from the body.

The user equipment may be implemented as a mobile terminal (such as a smart phone, a tablet personal computer (PC), a notebook PC, a portable game terminal, a portable/dongle type mobile router, and a digital camera) or an in-vehicle terminal (such as an vehicle navigation device). The user equipment may also be implemented as a terminal (that is also referred to as a machine type communication (MTC) terminal) that performs machine-to-machine (M2M) communication. In addition, the user equipment may further be a wireless communication module (such as an integrated circuitry module including one wafer) mounted on each of the above user equipment.

[Application Example About Base Station]

(First Application Example)

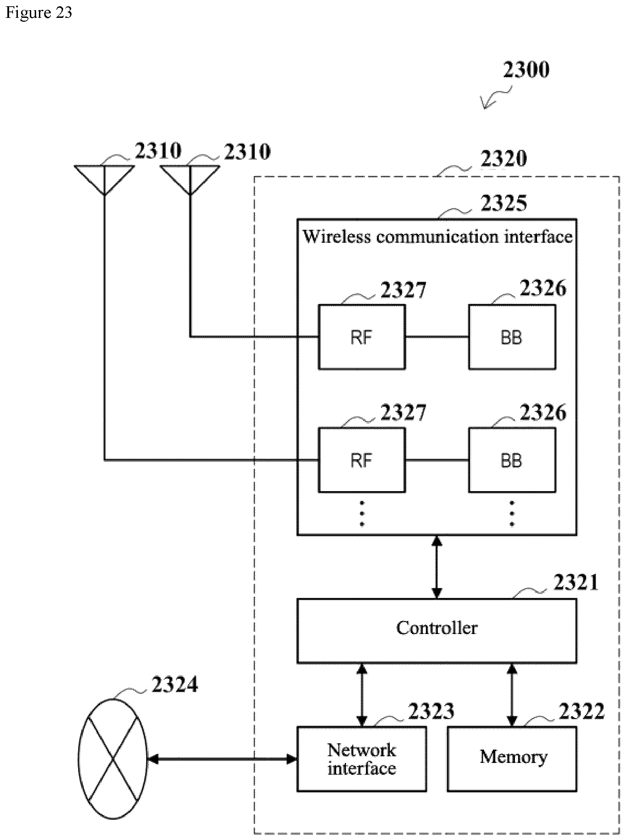

Figure 23 is a block diagram showing a first example of a schematic configuration of an eNB to which the technology of the present disclosure may be applied. An eNB 2300 includes one or more antennas 2310 and a base station device 2320. The base station device 2320 and each of the antennas 2310 may be connected to each other via an RF cable.

Each of the antennas 2310 includes a single or multiple antenna elements (such as multiple antenna elements included in a multiple-input multiple-output (MIMO) antenna), and is used for the base station device 2320 to transmit and receive wireless signals. As shown in Figure 23, the eNB 2300 may include multiple antennas 2310. For example, the multiple antennas 2310 may be compatible with multiple frequency bands used by the eNB 2300. Although Figure 23 shows an example in which the eNB 2300 includes multiple antennas 2310, the eNB 2300 may also include a single antenna 2310.

The base station device 2320 includes a controller 2321, a memory 2322, a network interface 2323, and a wireless communication interface 2325.

The controller 2321 may be, for example, a CPU or a DSP, and manipulate various functions of a higher layer of the base station device 2320. For example, the controller 2321 generates a data packet according to data in a signal processed by the wireless communication interface 2325, and transmits the generated packet via the network interface 2323. The controller 2321 may bundle data from multiple baseband processors to generate a bundled packet, and transfer the generated bundled packet. The controller 2321 may have a logical function for performing control such as radio resource control, radio bearer control, mobility management, admission control, and scheduling. This control may be executed in conjunction with nearby eNBs or core network nodes. The memory 2322 includes a RAM and a ROM, and stores programs executed by the controller 2321 and various types of control data (such as a terminal list, transmission power data, and scheduling data).

The network interface 2323 is a communication interface for connecting the base station device 2320 to a core network 2324. The controller 2321 may communicate with a core network node or another eNB via the network interface 2323. In this case, the eNB 2300 and the core network node or other eNBs may be connected to each other through a logical interface (such as an S1 interface and an X2 interface). The network interface 2323 may also be a wired communication interface, or a wireless communication interface for a wireless backhaul line. If the network interface 2323 is a wireless communication interface, the network interface 2323 may use a higher frequency band for wireless communications than the frequency band used by the wireless communication interface 2325.

The wireless communication interface 2325 supports any cellular communication scheme (such as Long Term Evolution (LTE) and LTE-Advanced), and provides wireless connection to a terminal located in a cell of the eNB 2300 via an antenna 2310. The wireless communication interface 2325 may generally include, for example, a baseband (BB) processor 2326 and an RF circuit 2327. The BB processor 2326 may perform, for example, encoding/decoding, modulation/demodulation, and multiplexing/demultiplexing, and perform various types of signal processing of layers (such as L1, medium access control (MAC), radio link control (RLC), and packet data convergence protocol (PDCP)). Instead of the controller 2321, the BB processor 2326 may have a part or all of the above-mentioned logical functions. The BB processor 2326 may be a memory storing a communication control program, or a module including a processor and related circuits configured to execute the program. The function of the BB processor 2326 may be changed by updating the program. The module may be a card or a blade inserted into a slot of the base station device 2320. Alternatively, the module may be a chip mounted on a card or blade. Meanwhile, the RF circuit 2327 may include, for example, a mixer, a filter, and an amplifier, and transmit and receive a wireless signal via the antenna 2310.

As shown in Figure 23, the wireless communication interface 2325 may include multiple BB processors 2326. For example, the multiple BB processors 2326 may be compatible with multiple frequency bands used by the eNB 2300. As shown in Figure 23, the wireless communication interface 2325 may include multiple RF circuits 2327. For example, the multiple RF circuits 2327 may be compatible with multiple antenna elements. Although Figure 23 shows an example in which the wireless communication interface 2325 includes multiple BB processors 2326 and multiple RF circuits 2327, the wireless communication interface 2325 may also include a single BB processor 2326 or a single RF circuit 2327.

(Second Application Example)

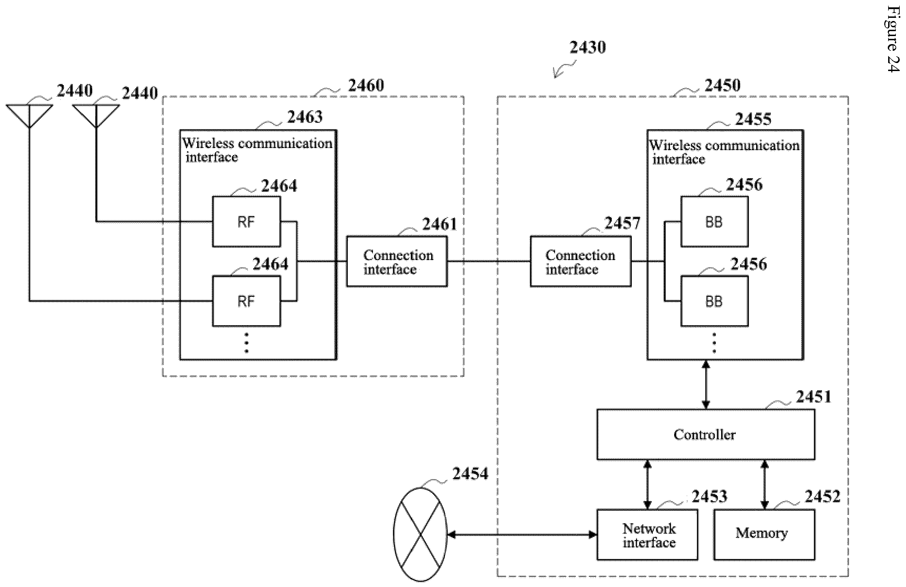

Figure 24 is a block diagram showing a second example of a schematic configuration of an eNB to which the technology of the present disclosure may be applied. An eNB 2430 includes one or more antennas 2440, a base station device 2450, and an RRH 2460. The RRH 2460 and each antenna 2440 may be connected to each other via an RF cable. The base station device 2450 and the RRH 2460 may be connected to each other via a high-speed line such as an optical fiber cable.

Each of the antennas 2440 includes a single or multiple antenna elements (such as multiple antenna elements included in a MIMO antenna) and is used for the RRH 2460 to transmit and receive a wireless signal. As shown in Figure 24, the eNB 2430 may include multiple antennas 2440. For example, the multiple antennas 2440 may be compatible with multiple frequency bands used by the eNB 2430. Although Figure 24 shows an example in which the eNB 2430 includes multiple antennas 2440, the eNB 2430 may also include a single antenna 2440.

The base station device 2450 includes a controller 2451, a memory 2452, a network interface 2453, a wireless communication interface 2455, and a connection interface 2457. The controller 2451, the memory 2452, and the network interface 2453 are the same as the controller 2321, the memory 2322, and the network interface 2323 as described with reference to Figure 23. The network interface 2453 is a communication interface configured to connect the base station device 2450 to a core network 2454.

The wireless communication interface 2455 supports any cellular communication scheme (such as LTE and LTE-Advanced), and provides wireless communications to a terminal located in a sector corresponding to the RRH 2460 via the RRH 2460 and the antenna 2440. The wireless communication interface 2455 may generally include, for example, a BB processor 2456. The BB processor 2456 is the same as the BB processor 2326 described with reference to Figure 23, except that the BB processor 2456 is connected to the RF circuit 2464 of the RRH 2460 via the connection interface 2457. As shown in Figure 24, the wireless communication interface 2455 may include multiple BB processors 2456. For example, the multiple BB processors 2456 may be compatible with multiple frequency bands used by the eNB 2430. Although Figure 24 shows an example in which the wireless communication interface 2455 includes multiple BB processors 2456, the wireless communication interface 2455 may also include a single BB processor 2456.

The connection interface 2457 is an interface for connecting the base station device 2450 (wireless communication interface 2455) to the RRH 2460. The connection interface 2457 may also be a communication module for communication in the above-mentioned high-speed line that connects the base station device 2450 (wireless communication interface 2455) to the RRH 2460.

The RRH 2460 includes a connection interface 2461 and a wireless communication interface 2463.

The connection interface 2461 is an interface for connecting the RRH 2460 (wireless communication interface 2463) to the base station device 2450. The connection interface 2461 may also be a communication module for communication in the above-mentioned high-speed line.

The wireless communication interface 2463 transmits and receives wireless signals via the antenna 2440. The wireless communication interface 2463 may generally include, for example, an RF circuit 2464. The RF circuit 2464 may include, for example, a mixer, a filter, and an amplifier, and transmit and receive wireless signals via the antenna 2440. As shown in Figure 24, the wireless communication interface 2463 may include multiple RF circuits 2464. For example, the multiple RF circuits 2464 may support multiple antenna elements. Although Figure 24 shows an example in which the wireless communication interface 2463 includes multiple RF circuits 2464, the wireless communication interface 2463 may also include a single RF circuit 2464.

In the eNB 2300 and eNB 2430 shown in Figures 23 and 24, the determination unit 410, the calculation unit 430, the collection unit 440, the measurement unit 450, the block generation unit 460 and the performance determination unit 470 in the processing circuitry described in Figure 4 and the calculation unit 610, the collection unit 630, the measurement unit 640, the block generation unit 650 and the performance determination unit 660 described in Figure 6 may be implemented by the controller 2321 and/or controller 2451. At least part of the function may also be implemented by the controller 2321 and the controller 2451. For example, the controller 2321 and/or controller 2451 may perform a function of determining a size and a generation time of a next block, determining a candidate size and a candidate generation time of the next block, collecting unverified spectrum transactions, measuring a channel condition, generating the next block, and determining device performance by executing corresponding instructions stored in a memory.

Preferred embodiments of the present disclosure are described above with reference to the drawings. However, the present disclosure is not limited to the above examples. Those skilled in the art may make various alternations and modifications within the scope of the appended claims. It should be understood that these alternations and modifications shall naturally fall within the technical scope of the present disclosure.

For example, units indicated with dotted line blocks in the functional block diagram shown in the drawings indicate that those functional units are optional in the corresponding device, and the optional functional units may be combined appropriately to achieve the required functions.

For example, multiple functions implemented by one unit in the above embodiments may be implemented by separate apparatus. Alternatively, multiple functions implemented by multiple units in the above embodiments may be implemented by separate apparatus, respectively. In addition, one of the above functions may be implemented by multiple units. Such configurations are naturally included in the technical scope of the present disclosure.

In the specification, steps described in the flowchart include not only the processes performed chronologically as the described sequence, but also the processes performed in parallel or individually rather than chronologically. Furthermore, the steps performed chronologically may be performed in other order appropriately.

Embodiments of the present disclosure are described in detail in conjunction with the drawings. However, it should be understood that the embodiments described above are intended to illustrate the present disclosure rather than limit the present disclosure. Those skilled in the art may make various modifications and alternations to the above embodiments without departing from the spirit and scope of the present disclosure. Therefore, the scope of the present disclosure is defined by the appended claims and equivalents thereof.

## Claims

1. An electronic device in a wireless communication system, wherein the wireless communication system comprises a plurality of electronic devices that use a blockchain to record spectrum transaction information in the wireless communication system, the electronic device comprising processing circuitry configured to:

   determine a size of a next block and a generation time of the next block according to information related to a wireless communication environment of the wireless communication system; and
   transmit the size of the next block and the generation time of the next block to other electronic devices in the wireless communication system.

2. The electronic device according to claim 1, wherein the information related to the wireless communication environment of the wireless communication system includes information related to a wireless communication environment where each of the plurality of electronic devices is located.

3. The electronic device according to claim 2, wherein the processing circuitry is further configured to:

   determine a candidate size of the next block and a candidate generation time of the next block according to the information related to the wireless communication environment where the electronic device is located;
   receive, from each of the other electronic devices, a candidate size of the next block and a candidate generation time of the next block determined by the other electronic device according to information related to a wireless communication environment where the other electronic device is located; and
   determine a size of the next block and a generation time of the next block according to the candidate size of the next block and the candidate generation time of the next block which are determined by the electronic device and the candidate size of the next block and the candidate generation time of the next block which are determined by each of the other electronic devices.

4. The electronic device according to claim 3, wherein the information related to the wireless communication environment where the electronic device is located comprises information related to unverified spectrum transactions collected by the electronic device, and a channel condition of the electronic device.

5. The electronic device according to claim 4, wherein the information related to the unverified spectrum transactions collected by the electronic device comprises the number of the unverified spectrum transactions collected by the electronic device, and/or transaction fees of the unverified spectrum transactions collected by the electronic device, and

wherein the transaction fees indicate fees paid by both sides of transaction to an electronic device having an accounting right of the next block in a case where the unverified spectrum transactions are written into the next block by the electronic device having the accounting right of the next block.

6. The electronic device according to claim 4, wherein the processing circuitry is further configured to:
determine the candidate size of the next block and the candidate generation time of the next block, so that the better the channel condition of the electronic device is, the larger the candidate size of the next block is.

7. The electronic device according to claim 5, wherein the processing circuitry is further configured to:
determine the candidate size of the next block and the candidate generation time of the next block, so that

the greater the number of the unverified spectrum transactions collected by the electronic device is, the larger the candidate size of the next block is and the earlier the candidate generation time of the next block is; and/or
the higher the transaction fees of the unverified spectrum transactions collected by the electronic device are, the earlier the candidate generation time of the next block is.

8. The electronic device according to claim 3, wherein the processing circuitry is further configured to determine the candidate size of the next block and the candidate generation time of the next block by using a neural network model, and
wherein an input to the neural network model comprises the information related to the wireless communication environment where the electronic device is located, and an output of the neural network model comprises the candidate size of the next block and the candidate generation time of the next block.

9. The electronic device according to claim 3, wherein the processing circuitry is further configured to:
select an electronic device from the plurality of electronic devices, and use the candidate size of the next block and the candidate generation time of the next block that are determined by the selected electronic device as the size of the next block and the generation time of the next block.

10. The electronic device according to claim 9, wherein the processing circuitry is further configured to:

determine a score for each of the plurality of electronic devices based on at least one of parameters comprising:

the number of unverified spectrum transactions collected by the electronic device;
transaction fees of the unverified spectrum transactions collected by the electronic device;
a sensitivity of the unverified spectrum transaction collected by the electronic device to a latency;
the number of time-out spectrum transactions among the unverified spectrum transactions collected by the electronic device;
a channel condition of the electronic device; and
a performance of the electronic device, and

select an electronic device with a highest score.

11. The electronic device according to claim 1, wherein the processing circuitry is further configured to:

generate the next block according to the size of the next block and the generation time of the next block, in a case where the electronic device obtains an accounting right of the next block; and
transmit the next block to other electronic devices in the wireless communication system.

12. An electronic device in a wireless communication system, wherein the wireless communication system comprises a plurality of electronic devices that use a blockchain to record spectrum transaction information in the wireless communication system, the electronic device comprising processing circuitry configured to:

determine a candidate size of a next block and a candidate generation time of the next block according to information related to a wireless communication environment where the electronic device is located; and
transmit the determined candidate size of the next block and candidate generation time of the next block to an electronic device having an accounting right of the previous block, so that the electronic device having the accounting right of the previous block determines a size of the next block and a generation time of the next block according to information related to a wireless communication environment of the wireless communication system.

**13.** The electronic device according to claim 12, wherein the information related to the wireless communication environment where the electronic device is located comprises information related to unverified spectrum transactions collected by the electronic device, and a channel condition of the electronic device.

**14.** The electronic device according to claim 13, wherein the information related to the unverified spectrum transactions collected by the electronic device comprises the number of the unverified spectrum transactions collected by the electronic device, and/or transaction fees of the unverified spectrum transactions collected by the electronic device, and

wherein the transaction fees indicate fees paid by both sides of transaction to an electronic device having an accounting right of the next block in a case where the unverified spectrum transactions are written into the next block by the electronic device having the accounting right of the next block.

**15.** The electronic device according to claim 13, wherein the processing circuitry is further configured to:
determine the candidate size of the next block and the candidate generation time of the next block, so that the better the channel condition of the electronic device is, the larger the candidate size of the next block is.

**16.** The electronic device according to claim 14, wherein the processing circuitry is further configured to:
determine the candidate size of the next block and the candidate generation time of the next block, so that

the greater the number of the unverified spectrum transactions collected by the electronic device is, the larger the candidate size of the next block is and the earlier the candidate generation time of the next block is; and/or the higher the transaction fees of the unverified spectrum transactions collected by the electronic device are, the earlier the candidate generation time of the next block is.

**17.** The electronic device according to claim 12, wherein the processing circuitry is further configured to determine the candidate size of the next block and the candidate generation time of the next block by using a neural network model, and

wherein an input to the neural network model comprises the information related to the wireless communication environment where the electronic device is located, and an output of the neural network model comprises the candidate size of the next block and the candidate generation time of the next block.

**18.** The electronic device according to claim 12, wherein the processing circuitry is further configured to:

receive, from the electronic device having the accounting right of the previous block, the size of the next block and the generation time of the next block;
generate the next block according to the size of the next block and the generation time of the next block, in a case where the electronic device obtains an accounting right of the next block; and
transmit the next block to other electronic devices in the wireless communication system.

**19.** A wireless communication method executed by an electronic device in a wireless communication system, wherein the wireless communication system comprises a plurality of electronic devices that uses a blockchain to record spectrum transaction information in the wireless communication system, the wireless communication method comprising:

determining a size of a next block and a generation time of the next block according to information related to a wireless communication environment of the wireless communication system; and
transmitting the size of the next block and the generation time of the next block to other electronic devices in the wireless communication system.

**20.** The wireless communication method according to claim 19, wherein the information related to the wireless communication environment of the wireless communication system comprises information related to a wireless communication environment where each of the plurality of electronic devices is located.

**21.** The wireless communication method according to claim 20, further comprising:

determining a candidate size of the next block and a candidate generation time of the next block according to the information related to the wireless communication environment where the electronic device is located;

receiving, from each of the other electronic devices, a candidate size of the next block and a candidate generation time of the next block determined by the other electronic device according to information related to a wireless communication environment where the other electronic device is located; and

determining a size of the next block and a generation time of the next block according to the candidate size of the next block and the candidate generation time of the next block which are determined by the electronic device and the candidate size of the next block and the candidate generation time of the next block which are determined by each of the other electronic devices.

22. The wireless communication method according to claim 21, wherein the information related to the wireless communication environment where the electronic device is located comprises information related to unverified spectrum transactions collected by the electronic device, and a channel condition of the electronic device.

23. The wireless communication method according to claim 22, wherein the information related to the unverified spectrum transactions collected by the electronic device comprises the number of the unverified spectrum transactions collected by the electronic device, and/or transaction fees of the unverified spectrum transactions collected by the electronic device, and

wherein the transaction fees indicate fees paid by both sides of transaction to an electronic device having an accounting right of the next block in a case where the unverified spectrum transactions are written into the next block by the electronic device having the accounting right of the next block.

24. The wireless communication method according to claim 22, wherein the candidate size of the next block and the candidate generation time of the next block are determined so that the better the channel condition of the electronic device is, the larger the candidate size of the next block is.

25. The wireless communication method according to claim 23, wherein the candidate size of the next block and the candidate generation time of the next block are determined so that

the greater the number of the unverified spectrum transactions collected by the electronic device is, the larger the candidate size of the next block is and the earlier the candidate generation time of the next block is; and/or

the higher the transaction fees of the unverified spectrum transactions collected by the electronic device are, the earlier the candidate generation time of the next block is.

26. The wireless communication method according to claim 21, wherein the step of determining the candidate size of the next block and the candidate generation time of the next block comprises:

determining the candidate size of the next block and the candidate generation time of the next block by using a neural network model, and

wherein an input to the neural network model comprises the information related to the wireless communication environment where the electronic device is located, and an output of the neural network model comprises the candidate size of the next block and the candidate generation time of the next block.

27. The wireless communication method according to claim 21, wherein the step of determining the candidate size of the next block and the candidate generation time of the next block comprises:

selecting an electronic device from the plurality of electronic devices, and using the candidate size of the next block and the candidate generation time of the next block that are determined by the selected electronic device as the size of the next block and the generation time of the next block.

28. The wireless communication method according to claim 27, further comprising:

determining a score for each of the plurality of electronic devices based on at least one of parameters comprising:

the number of unverified spectrum transactions collected by the electronic device;

transaction fees of the unverified spectrum transactions collected by the electronic device;

a sensitivity of the unverified spectrum transactions collected by the electronic device to a latency;

the number of time-out spectrum transactions among the unverified spectrum transactions collected by the electronic device;

a channel condition of the electronic device; and

a performance of the electronic device, and

selecting an electronic device with a highest score.

29. The wireless communication method according to claim 19, further comprising:

generating the next block according to the size of the next block and the generation time of the next block, in a case where the electronic device obtains an accounting right of the next block; and
transmitting the next block to other electronic devices in the wireless communication system.

30. A wireless communication method executed by an electronic device in a wireless communication system, wherein the wireless communication system comprises a plurality of electronic devices that use a blockchain to record spectrum transaction information in the wireless communication system, the wireless communication method comprising:

determining a candidate size of a next block and a candidate generation time of the next block according to information related to a wireless communication environment where the electronic device is located; and
transmitting the determined candidate size of the next block and candidate generation time of the next block to an electronic device having an accounting right of the previous block, so that the electronic device having the accounting right of the previous block determines a size of the next block and a generation time of the next block according to information related to a wireless communication environment of the wireless communication system.

31. The wireless communication method according to claim 30, wherein the information related to the wireless communication environment where the electronic device is located comprises information related to unverified spectrum transactions collected by the electronic device, and a channel condition of the electronic device.

32. The wireless communication method according to claim 31, wherein the information related to the unverified spectrum transactions collected by the electronic device comprises the number of the unverified spectrum transactions collected by the electronic device, and/or transaction fees of the unverified spectrum transactions collected by the electronic device, and
wherein the transaction fees indicate fees paid by both sides of transaction to an electronic device having an accounting right of the next block in a case where the unverified spectrum transactions are written into the next block by the electronic device having the accounting right of the next block.

33. The wireless communication method according to claim 31, wherein the candidate size of the next block and the candidate generation time of the next block are determined so that the better the channel condition of the electronic device is, the larger the candidate size of the next block is.

34. The wireless communication method according to claim 32, wherein the candidate size of the next block and the candidate generation time of the next block are determined so that

the greater the number of the unverified spectrum transactions collected by the electronic device is, the larger the candidate size of the next block is and the earlier the candidate generation time of the next block is; and/or
the higher the transaction fees of the unverified spectrum transactions collected by the electronic device are, the earlier the candidate generation time of the next block is.

35. The wireless communication method according to claim 30, wherein the step of determining the candidate size of the next block and the candidate generation time of the next block comprises determining the candidate size of the next block and the candidate generation time of the next block by using a neural network model, and
wherein an input to the neural network model comprises the information related to the wireless communication environment where the electronic device is located, and an output of the neural network model comprises the candidate size of the next block and the candidate generation time of the next block.

36. The wireless communication method according to claim 30, further comprising:

receiving, from the electronic device having the accounting right of the previous block, the size of the next block and the generation time of the next block;

generating the next block according to the size of the next block and the generation time of the next block, in a case where the electronic device obtains an accounting right of the next block; and
transmitting the next block to other electronic devices in the wireless communication system.

37. A computer readable storage medium comprising executable computer instructions that, when executed by a computer, cause the computer to execute the wireless communication method according to anyone of claims 19 to 36.

Figure 1

Figure 2

Figure 3

Figure 4

Figure 5

Figure 6

Figure 7

Figure 8(a)

Node C

candidate size and
candidate generation
time of block N+1

Node B

Node D

candidate size and
candidate generation
time of block N+1

candidate size and
candidate generation
time of block N+1

Node A

Figure 8(b)

Node C

Node B

size and generation
time of block N+1

Node D

size and generation
time of block N+1

size and generation
time of block N+1

Node A

Figure 8(c)

Figure 9

EP 4 287 740 A1

Figure 10

Figure 11

35

Figure 12

Figure 13

Figure 14

Figure 15

Figure 16

Figure 17

Figure 18

Figure 19

Figure 20

Figure 21

Figure 22

Figure 23

Figure 24

## INTERNATIONAL SEARCH REPORT

| International application No. |
|---|
| **PCT/CN2022/075136** |

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNABS, CNTXT, WPABS, WPABSC, ENTXT, ENTXTC, 3GPP, CJFD: 区块链, 区块, 大小, 时间, 容量, 生成, 产生, 环境, 信道条件, 信噪比, 频谱交易, 频谱管理, block chain, blockchain, block, time, size, generat+, environment, channel, SNR, SIR, SINR, spectrum, trad+, management

### C. DOCUMENTS CONSIDERED TO BE RELEVANT

| Category* | Citation of document, with indication, where appropriate, of the relevant passages | Relevant to claim No. |
|---|---|---|
| X | CN 110163600 A (INDUSTRIAL TECHNOLOGY RESEARCH INSTITUTE) 23 August 2019 (2019-08-23) description, paragraphs [0024]-[0060], and figures 1-5 | 1-3, 8-9, 11-12, 17-21, 26-27, 29-30, 35-37 |
| X | CN 107577694 A (ALIBABA GROUP HOLDING LIMITED) 12 January 2018 (2018-01-12) description paragraphs [0030]-[0052], [0102]-[0107], figures 1-5 | 1-3, 8-9, 11-12, 17-21, 26-27, 29-30, 35-37 |
| A | CN 109472566 A (PING AN TECHNOLOGY (SHENZHEN) CO., LTD.) 15 March 2019 (2019-03-15) entire document | 1-37 |
| A | CN 111064776 A (IALLCHAIN CO., LTD.) 24 April 2020 (2020-04-24) entire document | 1-37 |
| A | CN 109982435 A (BEIJING JIAOTONG UNIVERSITY) 05 July 2019 (2019-07-05) entire document | 1-37 |
| A | WO 2020155653 A1 (SOOCHOW UNIVERSITY) 06 August 2020 (2020-08-06) entire document | 1-37 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 April 2022** | **21 April 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/075136** |

| C. | DOCUMENTS CONSIDERED TO BE RELEVANT | |
|---|---|---|
| Category* | Citation of document, with indication, where appropriate, of the relevant passages | Relevant to claim No. |
| A | US 2017346693 A1 (MASTERCARD INTERNATIONAL INC.) 30 November 2017 (2017-11-30) <br> entire document | 1-37 |

Form PCT/ISA/210 (second sheet) (January 2015)

**EP 4 287 740 A1**

INTERNATIONAL SEARCH REPORT
Information on patent family members

International application No.

**PCT/CN2022/075136**

| Patent document cited in search report | | | Publication date (day/month/year) | Patent family member(s) | | | Publication date (day/month/year) |
|---|---|---|---|---|---|---|---|
| CN | 110163600 | A | 23 August 2019 | TW | I659373 | B | 11 May 2019 |
| | | | | US | 2019251187 | A1 | 15 August 2019 |
| CN | 107577694 | A | 12 January 2018 | KR | 20190119576 | A | 22 October 2019 |
| | | | | EP | 3552365 | A1 | 16 October 2019 |
| | | | | PL | 3552365 | T3 | 19 October 2020 |
| | | | | ES | 2805134 | T3 | 10 February 2021 |
| | | | | SG | 11201906418 P | A | 27 August 2019 |
| | | | | TW | 201909596 | A | 01 March 2019 |
| | | | | SG | 10202101207 W | A | 30 March 2021 |
| | | | | US | 2019018863 | A1 | 17 January 2019 |
| | | | | PH | 12019501623 | A1 | 16 March 2020 |
| | | | | WO | 2019014591 | A1 | 17 January 2019 |
| | | | | JP | 2020510330 | A | 02 April 2020 |
| CN | 109472566 | A | 15 March 2019 | None | | | |
| CN | 111064776 | A | 24 April 2020 | None | | | |
| CN | 109982435 | A | 05 July 2019 | None | | | |
| WO | 2020155653 | A1 | 06 August 2020 | CN | 109617752 | A | 12 April 2019 |
| | | | | US | 2022086539 | A1 | 17 March 2022 |
| US | 2017346693 | A1 | 30 November 2017 | US | 2019245698 | A1 | 08 August 2019 |
| | | | | WO | 2017204895 | A1 | 30 November 2017 |
| | | | | US | 2020344073 | A1 | 29 October 2020 |

Form PCT/ISA/210 (patent family annex) (January 2015)

46

**EP 4 287 740 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110179008